# EUROPEAN PATENT APPLICATION

(11) **EP 2 282 291 A1**
(43) Date of publication of application: **09.02.2011**
(21) Application number: 10162803.0
(22) Date of filing: 14.05.2010
(51) Int. Cl.: G06Q 30/00, G06Q 10/00

(54) **System and method of managing customer information**

(30) Priority: 24.07.2009 US 508998
(71) Applicant: NCR Corporation, Duluth, Georgia 30096 (US)
(72) Inventor: Craig, Jack, Oviedo, FL 32765 (US); Heinz, Theresa, Lake Mary, FL 32746 (US); Borucki, Robert, Mesa, AZ 85212 (US)
(74) Representative: MacLeod, Roderick William

(57) **Abstract**

A system (10) and method of managing customer information is described. The system (10) is suitable for managing travel details, and comprises: a management computer (12) executing manager software (36) for interacting with stored customer-related information, and monitor software (38) for interacting with computers (40, 42, or 48) operated by a plurality of different transport providers. The system (10) also includes a gateway (52) that is operable to facilitate mutual communication between the transport provider computers (40, 42, or 48) and the management computer (12). The system (10) also includes a profile (22) storing customer preferences and other information.

## Description

Service providers store transaction information. For example, an airline stores flight reservation, ticketing, payment and other transaction information in an airline computer system. A hotel stores reservation, payment, and other information in a hotel computer system.

Service providers manage their computer systems in isolation. Travel is difficult when changes occur to an itinerary that are unexpected and beyond the control of the traveler.

According to a first aspect of the invention there is provided a method of managing customer travel comprising: recording customer information and preferences relating to customer travel; storing the customer information as a profile in computer storage; monitoring travel status of vehicles operated by the plurality of transport providers that are relevant to the customer information profile; and using the customer information profile to alter customer travel arrangements automatically in response to a change of the travel status of a vehicle on which the customer is booked.

The vehicle may be an aeroplane, a ship, a car, a bus, a train, a tram, a subway, or the like.

The step of using the customer information profile to alter customer travel arrangements may include booking the customer on a different transport vehicle (either of the same type (for example, one airline flight to another airline flight) or a different type (for example, an airline flight instead of a train journey)) for a second journey segment while the customer is currently travelling on a first journey segment.

The method may further comprise sending a communication to the customer to provide updated details of travel arrangements for the customer.

The method may further comprise the step of sending a message to a third party using third party contact information stored in the profile if the customer is booked on a vehicle operated by one of the plurality of transport providers and the status of that vehicle changes.

According to a second aspect of the invention there is provided a system for managing travel details, the system comprising: a management computer executing manager software for interacting with stored customer-related information, and monitor software for interacting with computers operated by a plurality of different transport providers; and a gateway operable to facilitate mutual communication between the transport provider computers and the management computer; wherein the customer-related information includes a profile.

The profile may include third party contact information (such as an email address and/or a cellular telephone number for each third party) and the management computer (in particular, the monitor software) may be operable to send messages automatically to friends, relatives, business contacts, or anyone else the customer has identified in the profile if the customer identified by the profile has been delayed.

The monitor software may send a message containing a URL of a website of a transport computer to facilitate check-in. The message may include a printable boarding pass or an electronic or mobile boarding pass. A mobile boarding pass may include a scannable barcode and text, such as a bCode.

The monitor software may automatically check the customer onto a journey segment (an air flight, a rail journey, a sea journey, or the like) a predetermined time before departure, in accordance with customer check-in preferences stored in the profile. The monitor software may transmit a message to the customer (using contact details for the customer stored in the profile for that customer) to confirm that the customer has been checked in for that journey segment.

Monitor software may periodically contact a transport provider's computer to ascertain if a journey segment on which the customer is book is delayed or cancelled. In the event of a cancellation or delay, the monitor software may send a message to the customer indicating that monitor software has automatically rescheduled the customer for a different journey segment, in accordance with customer travel change preferences stored in the profile.

The system may further comprise an application programming interface (API) associated with the management computer, and a plurality of self-service terminals coupled to the management computer and communicating therewith via the API.

The monitor software may monitor the status of the transport vehicle conveying the customer on a first journey segment, and may book or re-book the customer on a second journey segment based on the expected arrival time of the first journey segment. The monitor software may send a message to the customer with a confirmation of the second journey segment booking.

According to a third aspect of the invention there is provided a method of managing customer information, the method comprising: recording customer information and preferences for interacting with a plurality of providers by a computer; storing the customer information in a profile by the computer; and using the customer information to facilitate interaction between provider computers and the customer by the computer.

According to a fourth aspect of the invention there is provided a system for managing customer information, the system comprising: a management computer for (i) recording customer information and preferences for interacting with a plurality of providers by a computer, and
( ii) for storing the customer information in a profile, and (iii) using the customer information to facilitate interaction between provider computers and the customer.

These aspects provide a system and method of managing customer information.

One or more of these aspects enable a system to establish a master customer profile and a master data store for facilitating customer interaction with different service providers that operate independently of each other.

For example, a master travel profile can be established for facilitating traveler interaction with airlines, rental car companies, hotels, entertainment companies, and other entities with whom a traveler may interact during a journey.

These and other aspects of the invention will become apparent from the following specific description, given by way of example, with reference to the accompanying drawings.

Fig. 1 is a block diagram of a system for managing customer information.

Fig. 2 is an example screen containing customer preferences for provider services.

Fig. 3 is an example screen containing customer preferences for management services.

Figs. 4a-d are example screens displayed by an example customer interface.

Fig. 5 is a flow diagram illustrating an example enrollment and itinerary registration process.

Fig. 6 is a flow diagram illustrating an example schedule monitoring and proactive changes process.

Fig. 7 is a flow diagram illustrating an example flight status lookup process.

Fig. 8 is a flow diagram illustrating an example pre-departure messaging process.

Figs. 9a-b comprise a flow diagram illustrating an example seat auctions process.

Figs. 10a-f are flow diagrams illustrating an example normal flight check-in process.

Fig. 11 is a flow diagram illustrating an example automatic flight check-in process.

Fig. 12 is a flow diagram illustrating an example airport club day pass offer process.

Fig. 13 is a flow diagram illustrating a proactive flight status and flight re-accommodation process.

Fig. 14 is a flow diagram illustrating an example proactive arrival content delivery process.

Figs. 15a-d are flow diagrams illustrating an example normal car rental process.

Fig. 16 is a flow diagram illustrating an example automatic car rental process.

Figs. 17a-b comprise a flow diagram illustrating an example normal hotel check-in process.

Fig. 18 is a flow diagram illustrating an example automatic hotel check-in process.

Fig. 19 is a flow diagram illustrating an example dining reservation process.

Fig. 20 is a flow diagram illustrating an example show and attractions tickets procurement process.

Fig. 21 is a flow diagram illustrating an example normal hotel check-out process.

Fig. 22 is a flow diagram illustrating an example automatic hotel check-out process.

Fig. 23 is a flow diagram illustrating an example car rental return process.

Fig. 24 is a flow diagram illustrating an example cruise check-in process.

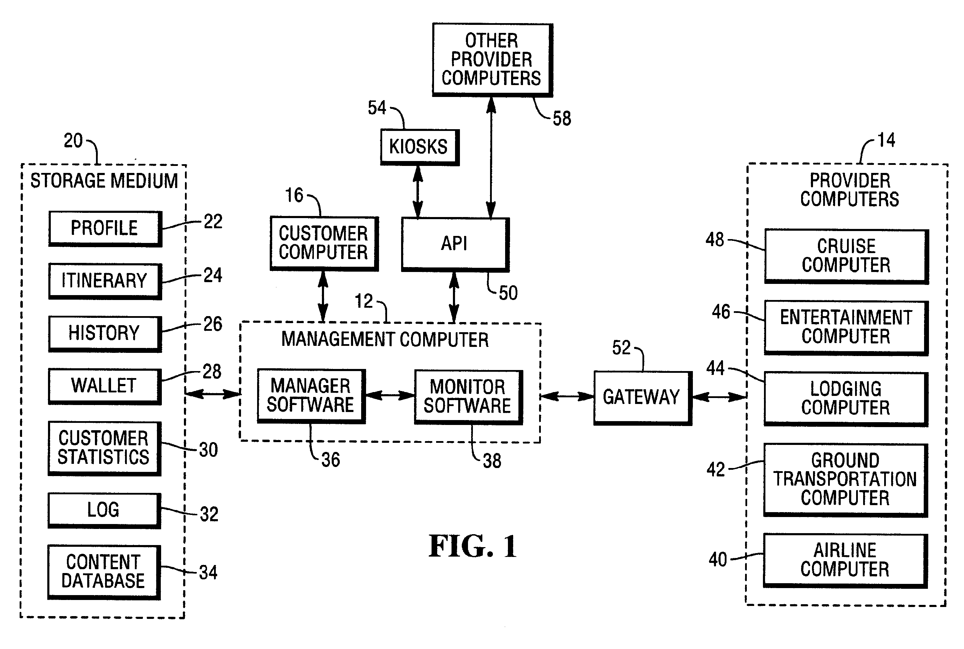

With reference to Fig. 1, example system 10 includes management computer 12, provider computers 14, and customer interface 16.

Customers with customer interfaces 16 establish accounts or memberships with the entity associated with management computer 12. This managing entity acts as an intermediary between provider companies associated with provider computers 14. The managing entity establishes relationships with the providers which may include partner relationships. The entity may charge a fee for providing this service to the customer.

Management computer 12 executes software which obtains, sends, and stores information on behalf of customers and providers. In an example embodiment, the software includes manager software 36 and monitor software 38.

Manager software 36 facilitates creation and maintenance of a profile 22 of a customer. Manager software 36 stores profile 22 in storage medium 20.

Profiles 22 may include providers of interest, user names and passwords for logging into management computer 12 and selected provider computers 14, customer preferences for selected providers, provider loyalty program information (e.g., frequent flyer number), and other information specific to a purpose.

For example, profile 22 may include third party contact information. If a customer is traveling and delayed, monitor software 38 may send messages to friends, relatives, business contacts, or anyone else the customer has identified in profile 22.

Manager software 36 also manages and stores itineraries 24, history 26, wallet 28, statistics 30, log 32, and content database 34 in storage medium 20.

Itineraries 24 include airline, car rental, and other travel reservation information.

History 26 includes records of actions taken by management computer 12.

Wallet 28 includes payment information, such as credit card information, for making purchases from providers.

Statistics 30 may include information about customer interactions with management computer 12 for the purpose of helping the managing entity associated with management computer 12 to improve the service it offers.

Log 32 is a log of events monitored by monitor software 38.

Content database 34 contains material for web pages displayed by manager software 36 and monitor software 38.

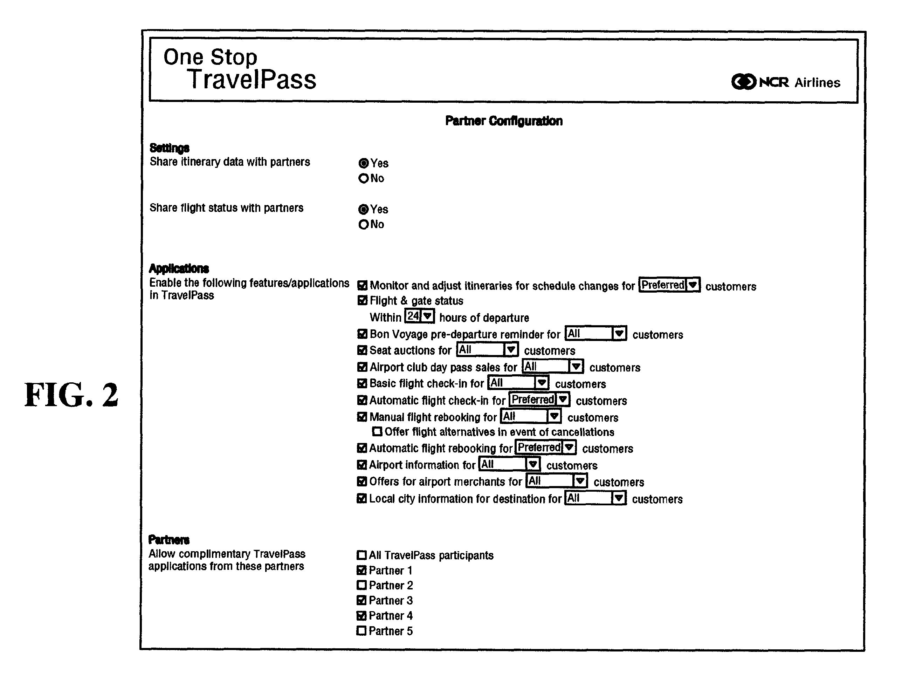

With reference to Fig. 2, an example web page 37 containing managing entity preferences. Providers are identified as partners of the managing entity. In this example, web page 37 includes preferences for at least one partner that is an airline.

Web page 37 includes settings for enabling or disabling connections between management computer 12 and provider computers 14, and settings for sharing or not sharing itinerary and flight status information with partners.

Web page 37 further includes settings related to customer services provided by management computer 12. For example, whether monitor software 38 should monitor and adjust itineraries for schedule changes and for which type of customers, i.e., preferred or all. Customer preferences for these services may override managing entity preferences.

Management computer 12 maintains and stores these settings in storage medium 20 under control of the managing entity.

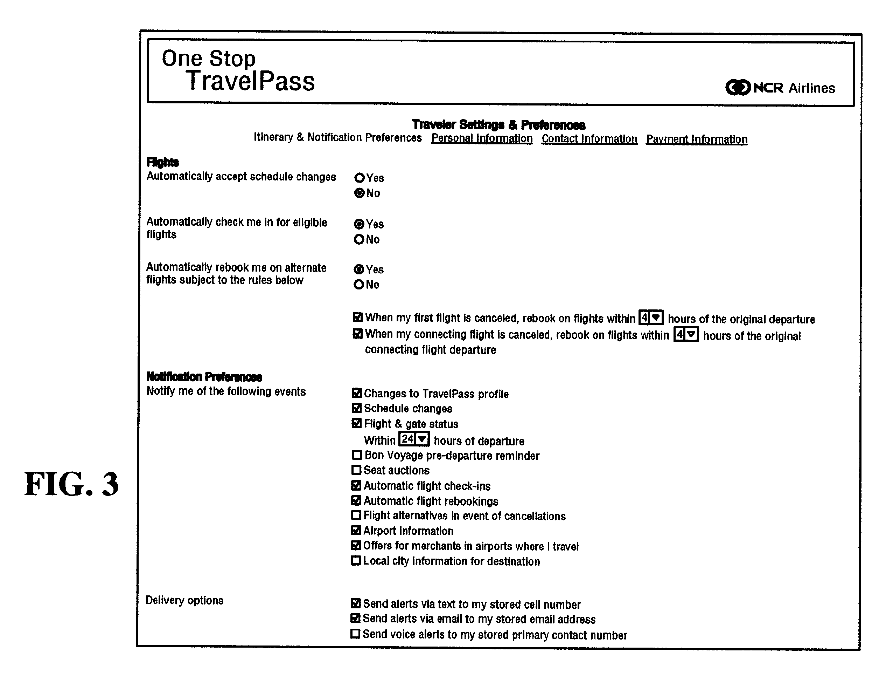

With reference to Fig. 3, an example web page 39 containing customer preferences of management services. The customer logs in to a website of management computer 12, selects web page 39, and enters choices in web page 39.

Web page 39 includes settings for flight preferences, such as whether monitor software 38 should automatically accept schedule changes, automatically check in the customer for eligible flights, and automatically rebook the customer for an alternate flight.

Web page 39 further includes customer preferences for how and when monitor software 38 should notify the customer. For example, a customer may select to receive notices from monitor software 38 following automatic check-in by monitor software 38. Example notification methods include text message, email, and voice alert.

Returning to Fig. 1, monitor software 38 receives profile, itinerary, and wallet data from manager software 36 and sends updated itinerary data and transaction data to manager software 36.

Much of what monitor software 38 does happens without customer interaction. For example, monitor software 38 monitors itineraries 24 by periodically connecting to provider computers 14. Monitor software 38 sends updates to the itineraries to manager software 36, which then stores the updates in storage medium 20.

Monitor software 38 may send messages to any of provider computers 14 in accordance with preferences in profile 22. Example provider computers 14 may include airline computer 40, ground transportation computer 42, lodging computer 44, entertainment computer 46, and cruise computer 48.

Airline computers 40 include computers associated with various airlines.

Ground transportation computers 42 include computers associated with rental car companies, bus companies, train companies, limousine companies, charter companies, and computers associated with other types of ground transportation companies.

Lodging computers 44 include computers associated with hotels, motels, and other types of lodging establishments.

Entertainment computers 46 include computers associated with restaurants, movie theaters, live entertainment providers, tourist attractions, and other types of entertainment providers.

Cruise computers 48 include computers associated with cruise ship companies.

Other customers may have more or fewer accounts with the same or other provider computers 14. Further, customers may complete transactions with providers who are intermediaries to other providers, such as travel agencies and their computers. Management computer 12 may couple to provider computers 40-48 through a gateway 52.

Monitor software 38 may send a message notifying the customer and third parties listed in profile 22 of changes in itineraries or delays. Monitor software 38 keeps a log 32 of all events and messages, and uses the information in log 32 to update history 26.

For example, through online accounts with provider computers 14, the customer wishes to arrange for a flight, a rental car, and a hotel reservation. The customer may also wish to book entertainment events. The customer connects to a website of management computer 12. Monitor software 38 uses information in the customer's profile 22 to connect to each provider computer 14 and download provider web pages. Monitor software 38 uses customer profile information to periodically synchronize customer itineraries 24 with provider computers 14.

The customer may elect to select a seat assignment for a flight. Alternatively, the customer may elect to have management computer automatically select a seat assignment based upon customer preferences in profile 22.

The customer has stored a request in profile 22 to receive alerts messages within twenty-four hours prior to a scheduled departure. Monitor software 38 sends an alert message to the customer interface 16 identified in profile 22 in the format or formats identified in profile 22. For example, customer interface 16 may be a portable wireless device identified in profile 22 and the customer may direct that monitor software 38 send an SMS message to the customer's portable wireless device and an e-mail message to the customer's email address.

Monitor software 38 may send a message containing a link to a website of airline computer 40 to facilitate check-in, including obtaining a printable boarding pass or an electronic or mobile boarding pass. A mobile boarding pass may include a scannable barcode and text, such as a bCode.

Monitor software 38 may alternatively send a message indicating that monitor software 38 has automatically checked in the customer a predetermined time before departure, in accordance with customer check-in preferences in profile 22.

Monitor software 38 periodically contacts airline computer 40 for departure delays and cancellations. If a schedule flight is delayed or cancelled, monitor software 38 may send a message to customer interface 16 with a link to the website of the airline company to facilitate selection of a different flight.

Monitor software 38 may alternatively send a message indicating that monitor software 38 has automatically rescheduled the customer for a different flight, in accordance with customer flight change preferences in profile 22.

While the flight is in route, monitor software 38 monitors the flight for arrival by periodically contacting airline computer 40 for arrival information. After arrival, monitoring software 38 may send a message to customer interface 16 with a link to the website of the rental car company to facilitate a car rental.

Alternatively, monitor software 38 may contact ground transportation computer 42 to check-in and receive the location of a rental car assigned to the customer by the associated rental car company. Monitor software 38 sends a message to the customer with a confirmation of check-in and a car location.

Monitor software 38 sends a message to customer interface 16 with a link to the website of the lodging establishment to facilitate a check-in with the lodging establishment.

Alternatively, monitor software 38 may contact lodging computer 44 to check-in and receive a room number. Monitor software 38 sends a message to the customer with a confirmation of check-in, a room number, and a code for obtaining a room key. Example codes may take the form of a numerical code, barcode, bCode, or other type of code.

Monitor software 38 contacts entertainment computer 46 to check for entertainment options. Monitor software 38 may send the customer a message with the available entertainment options for customer selection, book selected entertainment options, and send the customer another message with a confirmation of booking and a code for gaining admission. Example codes may take the form of a numerical code, barcode, bCode, or other type of code. Monitor software 38 may alternatively attempt to book an entertainment option specified by the customer in profile 22 and then send the customer a message with a confirmation or a denial for unavailability.

If the customer is also taking a cruise, monitor software 38 sends a message to customer interface 16 with a link to the website of the cruise company to facilitate a check-in with the cruise company.

Alternatively, monitor software 38 may contact cruise computer 48 to check-in and receive a room number. Monitor software 38 sends a message to the customer with a confirmation of check-in, a room number, and a code for obtaining a room key. Example codes may take the form of a numerical code, barcode, bCode, or other type of code.

Monitor software 38 may contact one or more of provider computers 14 to obtain promotions associated with the customer's destination. Monitor software 38 sends the customer a message with the available promotions. For example, monitor software 38 may connect to entertainment computer 46 and determine that a restaurant at the customer's destination is offering a coupon. Monitor software 38 obtains the details of promotions from entertainment computer 46 and sends a message to the customer with a link to a website of entertainment computer 46. Monitor software 38 may alternatively automatically download certain coupons or promotions, if available, as specified by the customer in profile 22 and then send the customer a message with the promotions or coupons, or a message indicating unavailability.

Monitor software 38 may facilitate checking out of the hotel by sending a message to communication interface 16 with a link to a website of lodging computer 44.

Alternatively, monitor software 38 may automatically connect to lodging computer 44 to check out at the end of the stay in accordance with customer preferences in profile 22. Monitor software 38 obtains a receipt from lodging computer 44 and sends the customer a message indicating that checkout was successful with the receipt or a link to the receipt.

Monitor software 38 may facilitate return of the rental car, for example, at unattended times or locations, by sending a message to ground transportation computer 42. The customer logs on to management computer 12 when the customer has returned the rental car and wishes to receive a receipt. Monitor software 38 obtains a receipt from ground transportation computer 42 and sends the customer a message indicating that return was successful with a receipt or a link to the receipt.

Manager software 36 and monitor software 38 may be written as web applications which display screen data in the form of web pages written using hypertext markup language (HTML), JavaScript, Java, or other suitable web page development language. Manager software 36 obtains web content from content database 34.

Customer interface 16 may include one or more computers used by the customer, including a personal computer or portable computing device, such as a cellular telephone or other wireless handheld device. Customer interface 16 includes a processor, memory, program and data storage, a display, and one or more user input devices. The display and user input device may be combined as a touch screen.

Customers may also interact with management computer from kiosks 54 through API 50.

Customer interface 16 connects to management computer 12 through one or more networks, which may include a cellular network and a global communications network, such as the Internet. Customer interface 16 may execute a web browser application for downloading and viewing web pages, including web pages stored by management computer 12.

Customer interface 16 may also communicate with other computers through management computer 12 or directly, such as curbside check-in computers for checking baggage, quick serve kiosks for ordering food products, currency exchange computers for completing currency exchange transactions, wayfinding computers for obtaining directions, automated teller machines for completing banking transactions, ticket counter computers for processing reservation, baggage, and check-in transactions, security computers for processing passport or other border control information, gate and boarding computers for flight boarding, and baggage claim computers for completing baggage pickup.

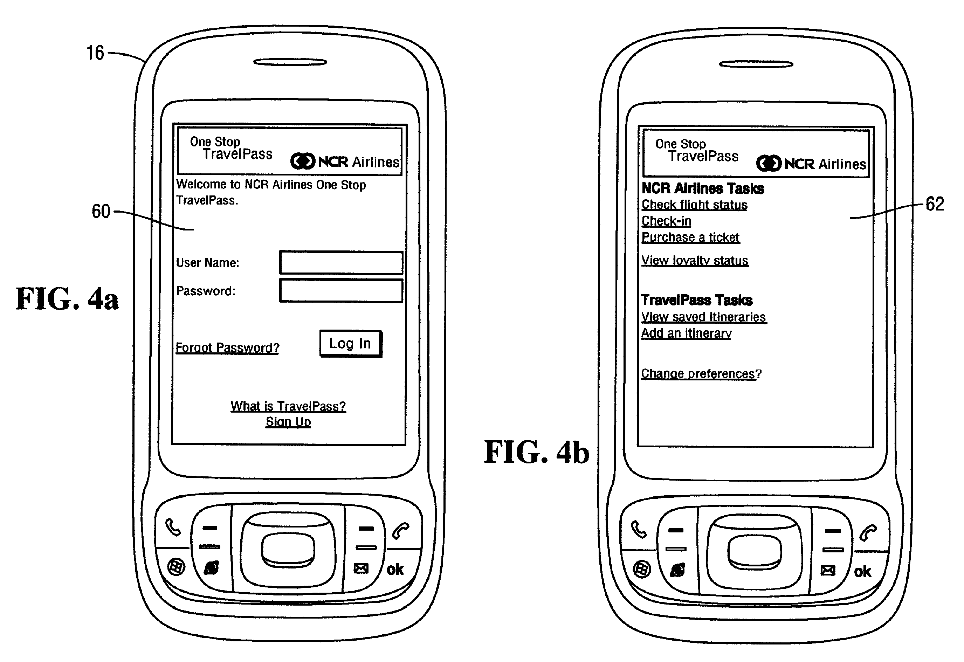

With reference to Figs. 4a-d, an example customer interface 16 includes a portable cellular communication device with a touch screen and a wireless connection capable of receiving web pages and sending information entered into web pages.

With reference to Fig. 4a, customer interface 16 displays an example login web page 60 from management computer 12. The customer logs in with a user name and password.

With reference to Fig. 4b, customer interface 16 displays an example web page 62 containing a menu of choices related to airline travel, including "check flight status", "check-in", "purchase a ticket", and "view loyalty status", and a menu of choices related to information stored by management computer 12, including "view save itineraries", and "add an itinerary".

Menu options appear as hyperlinks. Hyperlinks may include links to subsequent web pages, either web pages of management computer 12 or web pages of provider computers 14. Hyperlinks may also include message hyperlinks, such as email, SMS, MMS hyperlinks.

Customer interface 16 may receive messages from monitor software 38 as electronic mail (e-mail) messages, short message service (SMS) messages, multimedia messaging service (MMS) messages, or other types of alert messages.

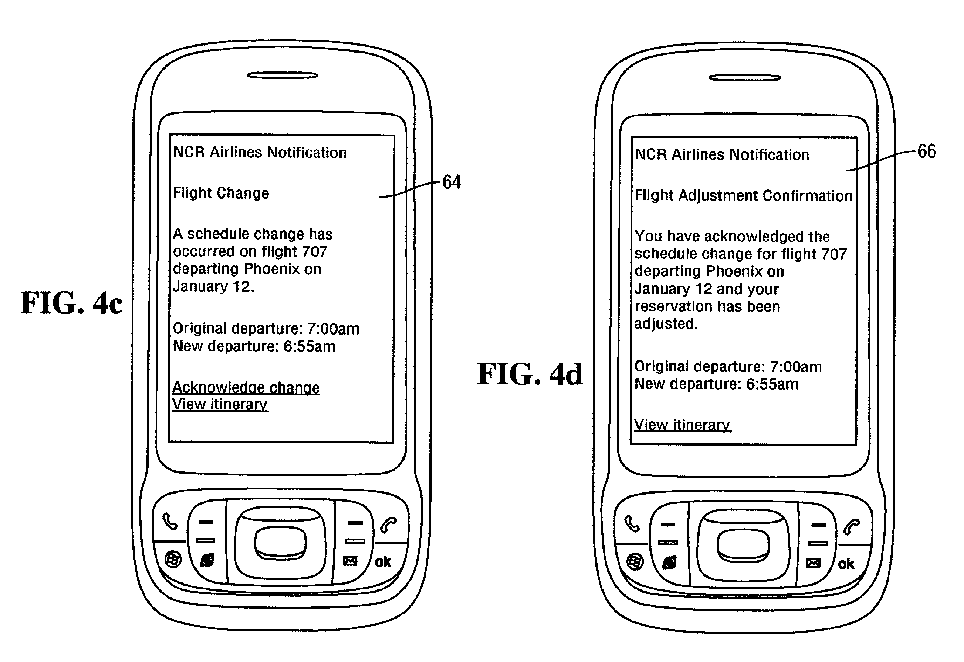

With reference to Fig. 4c, customer interface 16 receives and displays an example notification message 64, notifying the customer of a change in flight schedule. Message 64 resulted from flight monitoring activity by monitoring software 38 and the customer's opting out of automatic flight adjustments.

Message 64 includes related menu choices, including "Acknowledge change", and "View Itinerary". The customer selects "Acknowledge change" and customer interface 16 sends a message to management computer 12.

With reference to Fig. 4d, customer interface 16 receives and displays another example notification message 66, acknowledging the customer response and notifying the customer of a flight adjustment. Message 66 resulted from flight monitoring adjustment activity by monitoring software 38. Message 66 includes a related menu choice, including "View Itinerary".

Customer interface 16 is a customer's principal device for creating and updating information in profile 22, completing transactions, and receiving notifications. However, a customer may also communicate with the entity associated with management computer 12 via other methods besides the World Wide Web, including voice using a telephone, facsimile using a facsimile machine, and text using texting features of a cellular telephone, personal digital assistant, or other mobile communication device.

Further, management computer 12 may be combined with any of the provider computers 40-46. For example, airline computer 40 may function as management computer 12. An associated airline may offer its services to preferred passengers, establish relationships with other service providers, and configure its management software to connect to the other provider computers 14.

As another example, a ground transportation computer 42, such as a car rental company computer, may function as management computer 12. The car rental company computer may allow customers to view and interact with all participating airline and hotel computers, but not other rental car company computers.

Management computer 12 may also facilitate connections to computers 58 of other providers through API 50. Other providers may include providers with which the managing entity has failed to establish relationships.

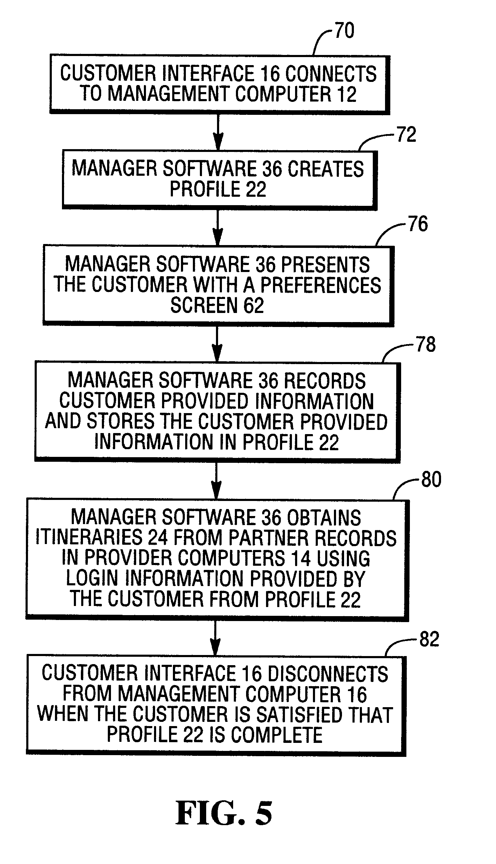

Figs. 5-24 illustrate a collection of example processes for a customer who signs up to have management computer 12 manage a plurality of provider interactions with the customer. In this example, the provider interactions relate to a travel itinerary involving an airline flight, a car rental, a hotel, entertainment, and a cruise. Other examples of managed provider interactions are also envisioned. Some interactions are identified as "normal" as opposed to "automatic", relating to customer preferences in profile 22 for more or less customer decision making and customer interaction with management computer 12 during individual transactions.

With reference to Fig. 5, a customer enrolls in a provider management program and registers itineraries 24 with the program.

In step 70, customer interface 16 connects to management computer 12. For example, customer interface 16 may connect to a web site of management computer 12.

In step 72, manager software 36 creates profile 22.

In step 74, manager software 36 presents the customer with a preferences screen 62 similar to the one in Fig. 3, including choices for the available providers.

In step 76, manager software 36 records customer provided information and stores the customer provided information in profile 22. If the customer wishes to establish a wallet 28, manager software 36 creates wallet 28 and associates it with the customer profile 22.

In step 78, manager software 36 associates selected partners in preferences screen 62 with profile 22.

In step 80, manager software 36 obtains itineraries 24 from partner records in provider computers 14 using login information provided by the customer from profile 22.

In step 82, customer interface 16 disconnects from management computer 16 when the customer is satisfied that profile 22 is complete.

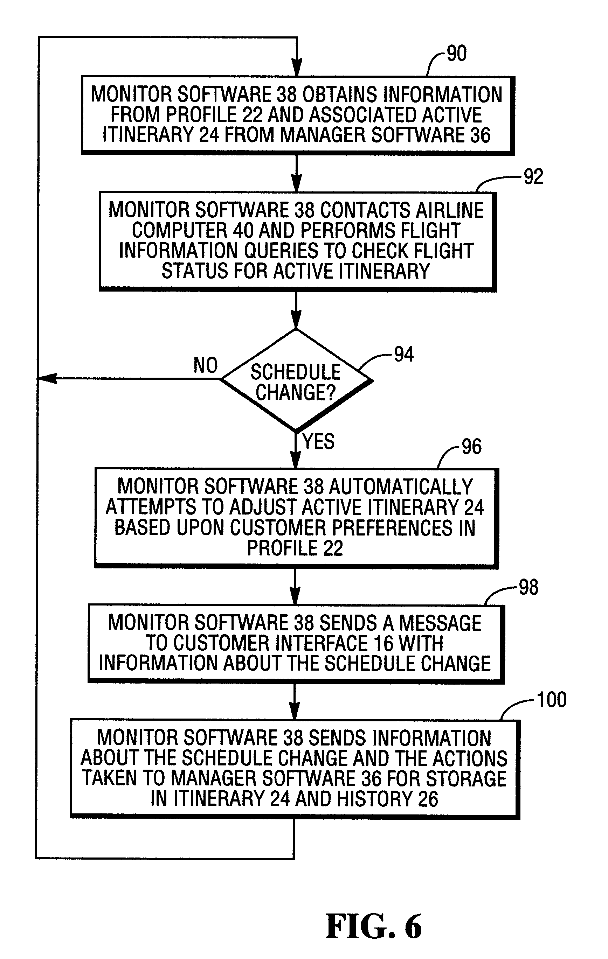

With reference to Fig. 6, monitor software 38 begins example automatic flight schedule monitoring in accordance with preferences in profile 22.

In step 90, monitor software 38 obtains information from profile 22 and associated active itinerary 24 from manager software 36.

In step 92, monitor software 38 contacts airline computer 40 using the information in profile 22 and performs flight information queries to check flight status for active itinerary 24.

In step 94, monitor software 38 determines whether a schedule change has occurred from the results of the queries. If no schedule change has occurred, monitor software 38 returns to step 90. Otherwise, monitor software 38 continues to step 96.

In step 96, monitor software 38 automatically attempts to adjust active itinerary 24 based upon customer preferences in profile 22. For example, if a flight is cancelled, monitor software 38 automatically attempts to schedule the customer for another flight.

In step 98, monitor software 38 sends a message to customer interface 16 with information about the schedule change. For example, monitor software 38 may send an e-mail message, SMS message, MMS message, or other type of alert message.

In step 100, monitor software 38 sends information about the schedule change and the actions taken to manager software 36 for storage in itinerary 24 and history 26.

Operation returns to step 90 to continue monitoring.

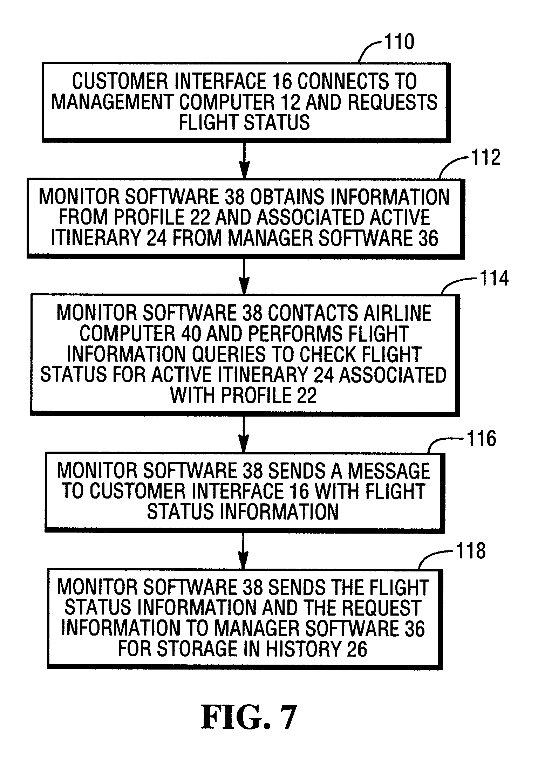

With reference to Fig. 7, monitor software 38 responds to customer-initiated requests for flight status.

In step 110, customer interface 16 connects to management computer 12 and requests flight status.

In step 112, monitor software 38 obtains information from profile 22 and associated active itinerary 24 from manager software 36.

In step 114, monitor software 38 contacts airline computer 40 using the information in profile 22 and performs flight information queries to check flight status for active itinerary 24 associated with profile 22.

In step 116, monitor software 38 sends a message to customer interface 16 with flight status information.

In step 118, monitor software 38 sends the flight status information and the request information to manager software 36 for storage in history 26.

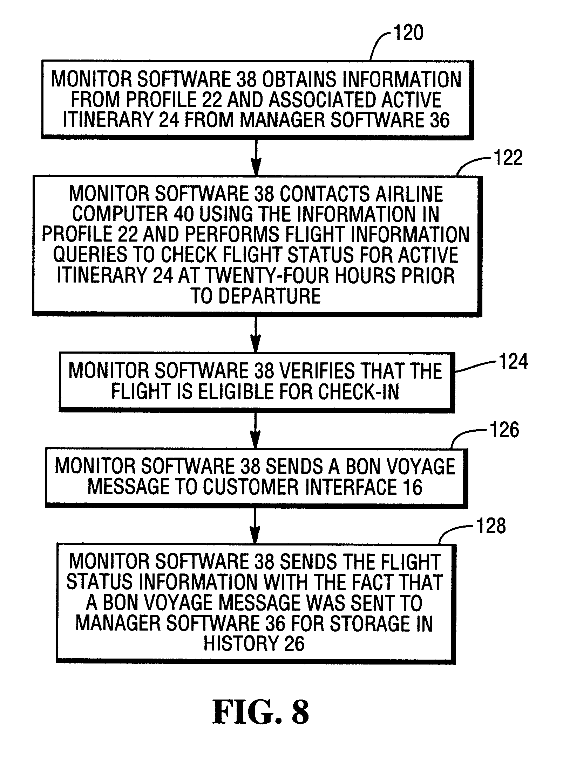

With reference to Fig. 8, monitor software 38 begins example proactive pre-departure messaging.

In step 120, monitor software 38 obtains information from profile 22 and associated active itinerary 24 from manager software 36.

In step 122, monitor software 38 contacts airline computer 40 using the information in profile 22 and performs flight information queries to check flight status for active itinerary 24 at twenty-four hours prior to departure.

In step 124, monitor software 38 verifies that the flight is eligible for check-in.

In step 126, monitor software 38 sends a Bon Voyage message to customer interface 16.

In step 128, monitor software 38 sends the flight status information with the fact that a Bon Voyage message was sent to manager software 36 for storage in history 26.

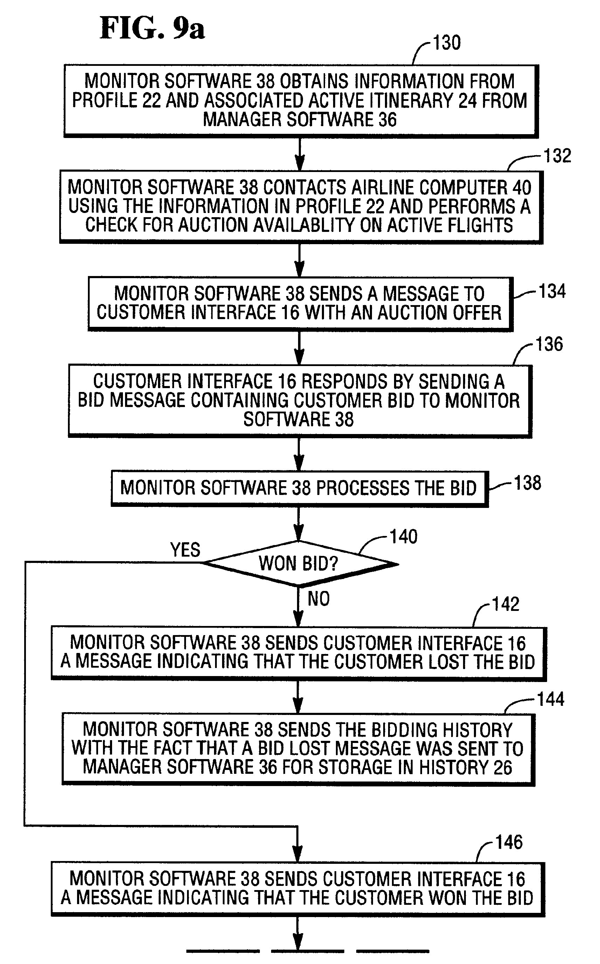

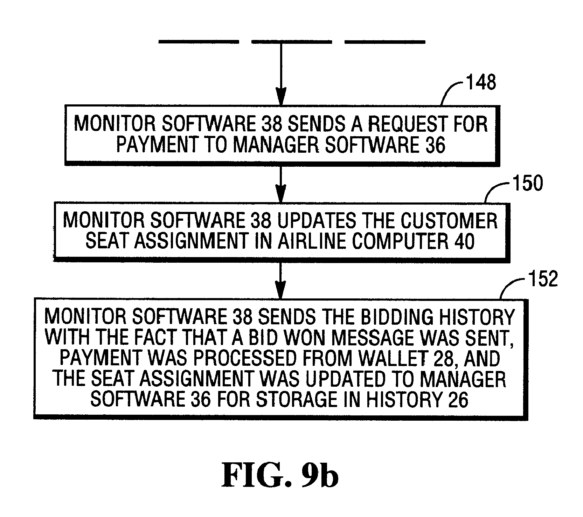

With reference to Figs. 9a-b, monitor software 38 begins example seat auctions.

In step 130, monitor software 38 obtains information from profile 22 and associated active itinerary 24 from manager software 36.

In step 132, monitor software 38 contacts airline computer 40 using the information in profile 22 and performs a check for auction availability on active flights.

In step 134, monitor software 38 sends a message to customer interface 16 with an auction offer.

In step 136, customer interface 16 responds by sending a bid message containing a customer bid to monitor software 38.

In step 138, monitor software 38 processes the bid.

In step 140, monitor software 38 determines whether the customer won or lost the bid. If the customer lost the bid, operation proceeds to step 142. Otherwise, operation proceeds to step 146.

In step 142, monitor software 38 sends customer interface 16 a message indicating that the customer lost the bid.

In step 144, monitor software 38 sends the bidding history with the fact that a bid lost message was sent to manager software 36 for storage in history 26. Operation ends.

In step 146, monitor software 38 sends customer interface 16 a message indicating that the customer won the bid.

In step 148, monitor software 38 sends a request for payment to manager software 36. Manager software 36 processes payment for the bid from wallet 28.

In step 150, monitor software 38 updates the customer seat assignment in airline computer 40.

In step 152, monitor software 38 sends the bidding history with the fact that a bid won message was sent, payment was processed from wallet 28, and the seat assignment was updated to manager software 36 for storage in history 26.

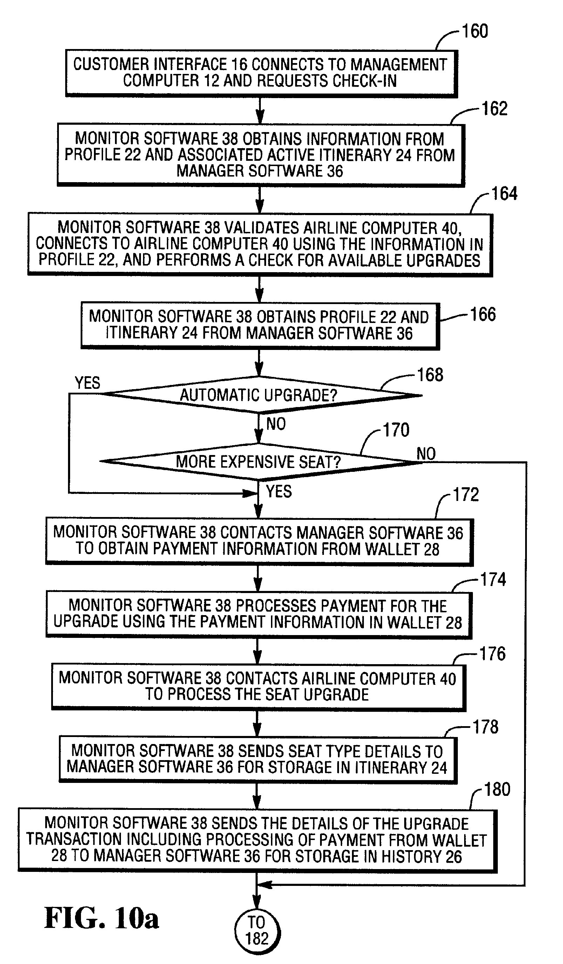

With reference to Figs. 10a-f, monitor software 38 begins example normal flight check-in.

With reference to Fig. 10a, customer interface 16 connects to management computer 12 and requests check-in in step 160.

In step 162, monitor software 38 obtains information from profile 22 and associated active itinerary 24 from manager software 36.

In step 164, monitor software 38 validates airline computer 40, connects to airline computer 40 using the information in profile 22, and performs a check for available upgrades.

In step 166, monitor software 38 obtains information from profile 22 and itinerary 24 from manager software 36.

In step 168, monitor software 38 determines whether profile 22 contains a preference for automatic upgrade. If so, operation proceeds to step 172. Otherwise, operation proceeds to step 170.

In step 170, monitor software 38 displays a prompt asking the customer whether the customer would like an upgrade to a more expensive seat. Operation continues to step 182 if the customer rejects the upgrade. Otherwise, operation continues to step 172.

In step 172, monitor software 38 contacts manager software 36 to obtain payment information from wallet 28.

In step 174, monitor software 38 processes payment for the upgrade using the payment information in wallet 28.

In step 176, monitor software 38 contacts airline computer 40 to process the seat upgrade.

In step 178, monitor software 38 sends seat type details to manager software 36 for storage in itinerary 24.

In step 180, monitor software 38 sends the details of the upgrade transaction including processing of payment from wallet 28 to manager software 36 for storage in history 26.

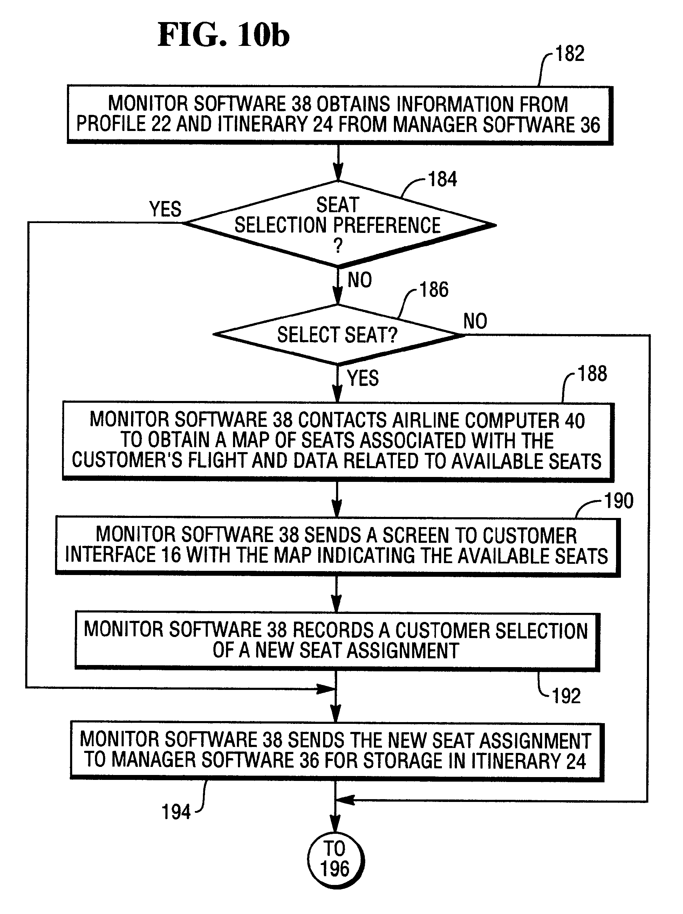

With reference to Fig. 10b, monitor software 38 obtains information from profile 22 and itinerary 24 from manager software 36 in step 182.

In step 184, monitor software 38 determines whether profile 22 contains a preference for seat selection. If so, operation proceeds to step 194. Otherwise, operation proceeds to step 186.

In step 186, monitor software displays a screen offering the customer a chance to select a seat assignment. Operation continues to step 196 if the customer rejects the option to select a seat assignment. Otherwise, operation continues to step 188.

In step 188, monitor software 38 contacts airline computer 40 to obtain a map of seats associated with the customer's flight and data related to available seats.

In step 190, monitor software 38 sends a screen to customer interface 16 with the map indicating the available seats.

In step 192, monitor software 38 records a customer selection of a seat assignment.

In step 194, monitor software 38 sends the seat assignment to manager software 36 for storage in itinerary 24.

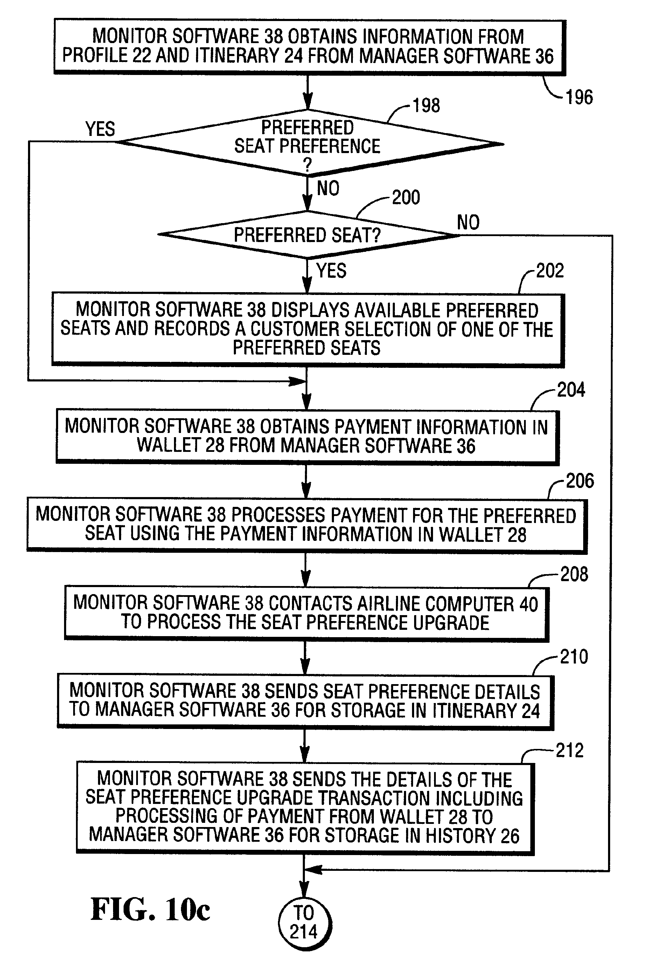

With reference to Fig. 10c, monitor software 38 obtains information from profile 22 and itinerary 24 from manager software 36 in step 196.

In step 198, monitor software 38 determines whether profile 22 contains a preference for a preferred seat, which may include a seat with more leg room, such as an emergency row seat, or a seat in a preferred location, such as a seat closer to the front of the airplane. Other criteria for preferred seats are also envisioned. If so, operation proceeds to step 204. Otherwise, operation proceeds to step 200.

In step 200, monitor software 38 displays a prompt asking the customer whether the customer would like a preferred seat. Operation continues to step 214 if the customer rejects the upgrade. Otherwise, operation continues to step 202.

In step 202, displays available preferred seats and records a customer selection of one of the preferred seats.

In step 204, monitor software 38 obtains payment information in wallet 28 from manager software 36.

In step 206, monitor software 38 processes payment for the preferred seat using the payment information in wallet 28.

In step 208, monitor software 38 contacts airline computer 40 to process the seat preference upgrade.

In step 210, monitor software 38 sends seat preference details to manager software 36 for storage in itinerary 24.

In step 212, monitor software 38 sends the details of the seat preference upgrade transaction including processing of payment from wallet 28 to manager software 36 for storage in history 26.

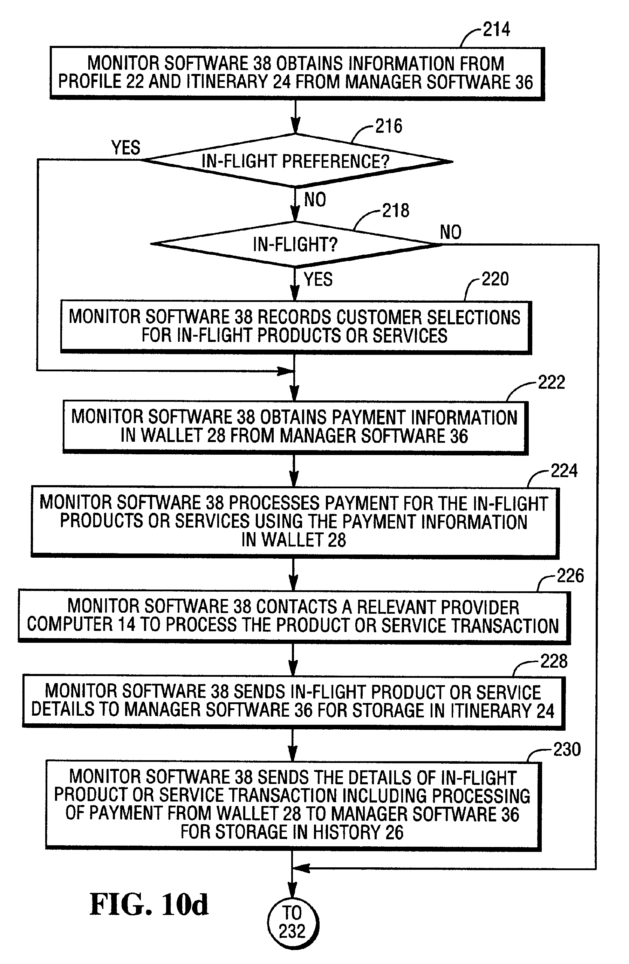

With reference to Fig. 10d, monitor software 38 obtains information from profile 22 and itinerary 24 from manager software 36 in step 214.

In step 216, monitor software 38 determines whether profile 22 contains a preference for certain in-flight products or services, which may include meals. Other criteria for in-flight products or services are also envisioned. If so, operation proceeds to step 222. Otherwise, operation proceeds to step 218.

In step 218, monitor software 38 displays a prompt asking the customer whether the customer would like any in-flight products or services. Operation continues to step 232 if the customer rejects the offer. Otherwise, operation continues to step 220.

In step 220, monitor software 38 records customer selections for products or services.

In step 222, monitor software 38 contacts manager software 36 to obtain payment information from wallet 28.

In step 224, monitor software 38 processes payment for the products or services using the payment information in wallet 28.

In step 226, monitor software 38 contacts the relevant provider computer 14, which may include airline computer 40 or entertainment computer 46, for example, to process the product or service transaction.

In step 228, monitor software 38 sends in-flight product or service details to manager software 36 for storage in itinerary 24.

In step 230, monitor software 38 sends the details of in-flight product or service transaction including processing of payment from wallet 28 to manager software 36 for storage in history 26.

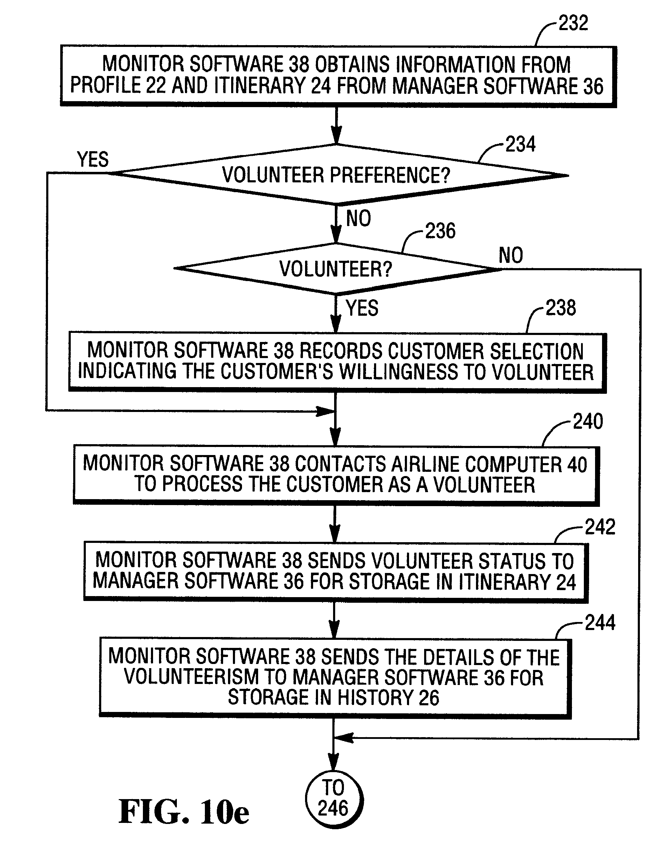

With reference to Fig. 10e, monitor software 38 obtains information from profile 22 and itinerary 24 from manager software 36 in step 232.

In step 234, monitor software 38 determines whether profile 22 contains a preference for volunteering to surrender a seat for a later flight and possible incentives, which may include free future flights, hotel stays, and meals. Other incentives are also envisioned. If so, operation proceeds to step 240. Otherwise, operation proceeds to step 236.

In step 236, monitor software 38 displays a prompt asking the customer whether the customer would like to volunteer for a later flight including possible incentives. Operation continues to step 246 if the customer rejects the offer. Otherwise, operation continues to step 238.

In step 238, monitor software 38 records customer selection indicating the customer's willingness to volunteer.

In step 240, monitor software 38 contacts airline computer 40 to process the customer as a volunteer.

In step 242, monitor software 38 sends volunteer status to manager software 36 for storage in itinerary 24.

In step 244, monitor software 38 sends the details of the volunteerism to manager software 36 for storage in history 26.

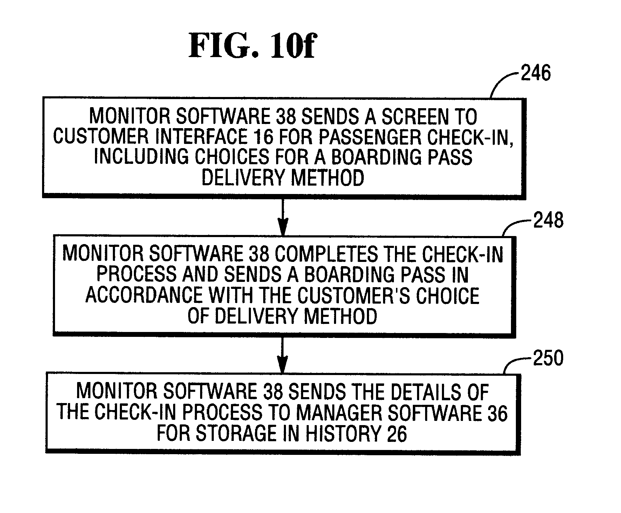

With reference to Fig. 10f, monitor software 38 sends a screen to customer interface 16 for passenger check-in, including choices for a boarding pass delivery method in step 246. Example delivery methods include sending the boarding pass to a computer for printing, sending the boarding pass to a mobile web device or cellular telephone, or sending the boarding pass to a facsimile machine.

In step 248, monitor software 38 completes the check-in process and sends a boarding pass in accordance with the customer's choice of delivery method.

In step 250, monitor software 38 sends the details of the check-in process to manager software 36 for storage in history 26.

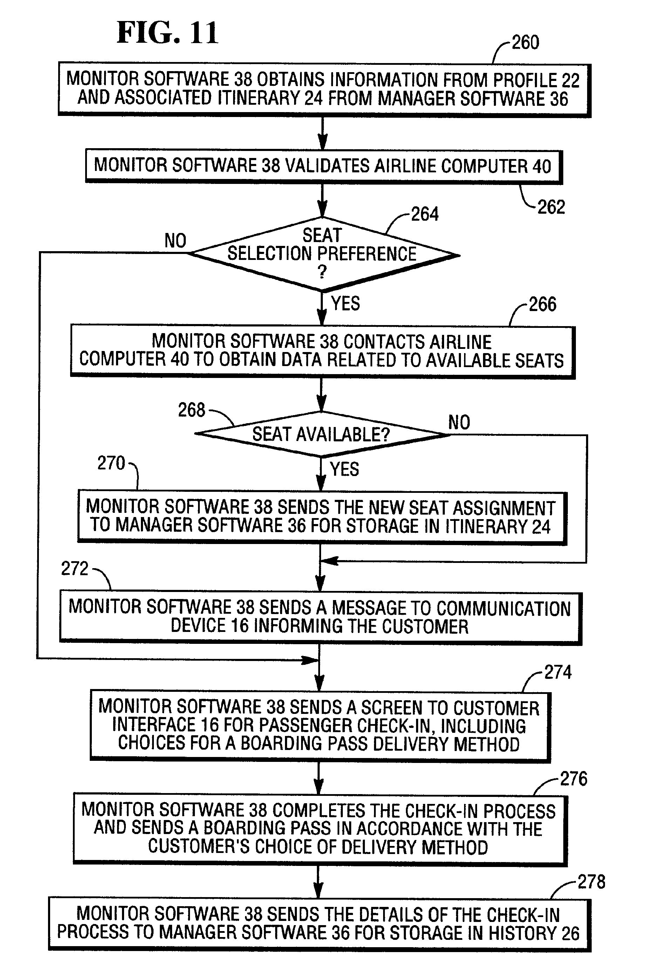

With reference to Fig. 11, monitor software 38 begins example automatic flight check-in in accordance with preferences in profile 22, skipping all dialogs with customer interface 16.

In step 260, monitor software 38 obtains information from profile 22 and associated active itinerary 24 from manager software 36.

In step 262, monitor software 38 validates airline computer 40.

In step 264, monitor software 38 determines whether profile 22 contains a preference for seat selection. If so, operation proceeds to step 266. Otherwise, operation proceeds to step 274.

In step 266, monitor software 38 contacts airline computer 40 to obtain data related to available seats.

In step 268, monitor software 38 compares the data and determines whether a seat is available based upon the preferences. If so, operation continues to step 270. Otherwise, operation proceeds to step 272.

In step 270, monitor software 38 sends the new seat assignment to manager software 36 for storage in itinerary 24.

In step 272, monitor software 38 sends a message to communication device 16 informing the customer.

In step 274, monitor software 38 sends a screen to customer interface 16 for passenger check-in, including choices for a boarding pass delivery method.

In step 276, monitor software 38 completes the check-in process and sends a boarding pass in accordance with the customer's choice of delivery method.

In step 278, monitor software 38 sends the details of the check-in process to manager software 36 for storage in history 26.

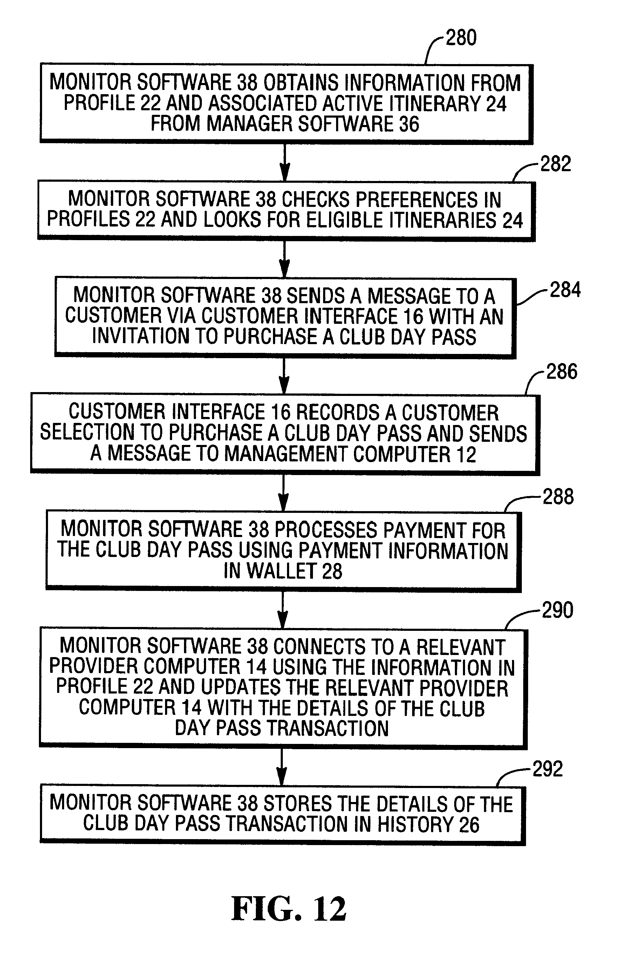

With reference to Fig. 12, monitor software 38 begins example airport club day pass offers.

In step 280, monitor software 38 obtains profiles 22 from manager software 36.

In step 282, monitor software 38 checks preferences in profiles 22 and looks for eligible itineraries 24.

In step 284, monitor software 38 sends a message to a customer via customer interface 16 with an invitation to purchase a club day pass.

In step 286, customer interface 16 records a customer selection to purchase a club day pass and sends a message to management computer 12.

In step 288, monitor software 38 processes payment for the club day pass using payment information in wallet 28.

In step 290, monitor software 38 connects to a relevant provider computer 14, which may include an airline computer 40, using the information in profile 22, and updates the relevant provider computer 14 with the details of the club day pass transaction.

In step 292, monitor software 38 stores the details of the club day pass transaction in history 26.

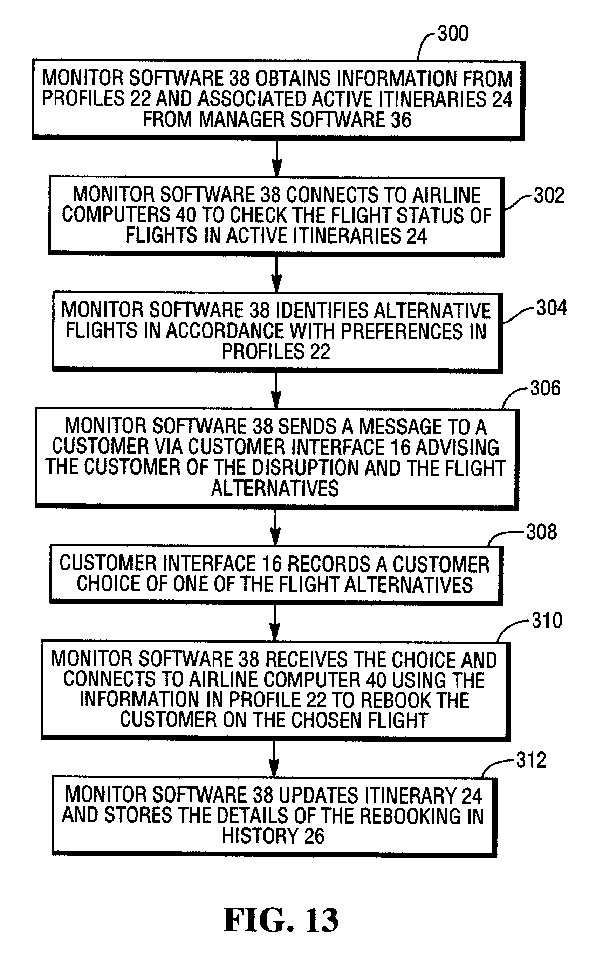

With reference to Fig. 13, monitor software 38 begins example proactive flight procedures.

In step 300, monitor software 38 obtains profiles 22 and itineraries 24 from manager software 36.

In step 302, monitor software 38 connects to airline computers 40 to check the flight status of flights in active itineraries 24.

Airline computers 40 also connect to other provider computers 14 to notify corresponding downstream partners, such as hotels and entertainment venues, of disruptions, such as gate changes, cancellations, and delays. Further, airline computers 40 send messages to customers via customer devices 16 advising the customers of the disruptions.

If airline computers 40 report disruptions requiring accommodation, monitor software 38 identifies alternative flights in accordance with preferences in profiles 22 in step 304.

In step 306, monitor software 38 sends a message to a customer via customer interface 16 advising the customer of the disruption and the flight alternatives.

In step 308, customer interface 16 records a customer choice of one of the flight alternatives.

In step 310, monitor software 38 receives the choice and connects to airline computer 40 using the information in profile 22 to rebook the customer on the chosen flight.

In step 312, monitor software 38 updates itinerary 24 and stores the details of the rebooking in history 26.

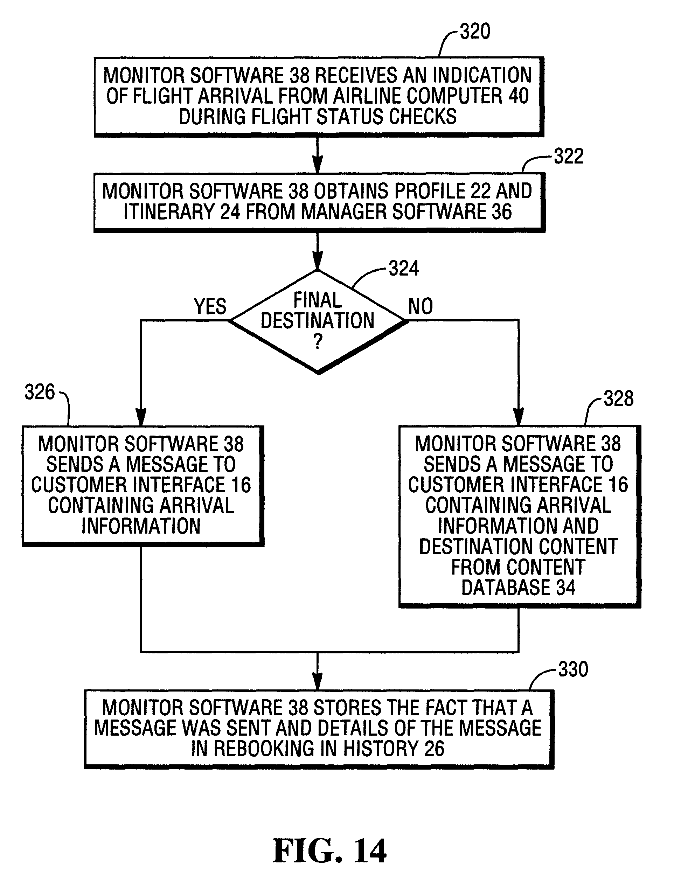

With reference to Fig. 14, monitor software 38 begins example proactive arrival procedures.

In step 320, monitor software 38 receives an indication of flight arrival from airline computer 40 during flight status checks.

In step 322, monitor software 38 obtains profile 22 and itinerary 24 from manager software 36.

In step 324, monitor software 38 determines from itinerary 24 whether the current location is the final destination. If so, operation continues to step 326. Otherwise, operation proceeds to step 328.

In step 326, monitor software 38 sends a message to a customer via customer interface 16 containing arrival information.

In step 328, monitor software 38 sends a message to a customer via customer interface 16 containing arrival information and destination content from content database 34. Content may include information about lodging, transportation, activities, entertainment, and facts about the destination.

In step 330, monitor software 38 stores the fact that a message was sent and details of the message in rebooking in history 26.

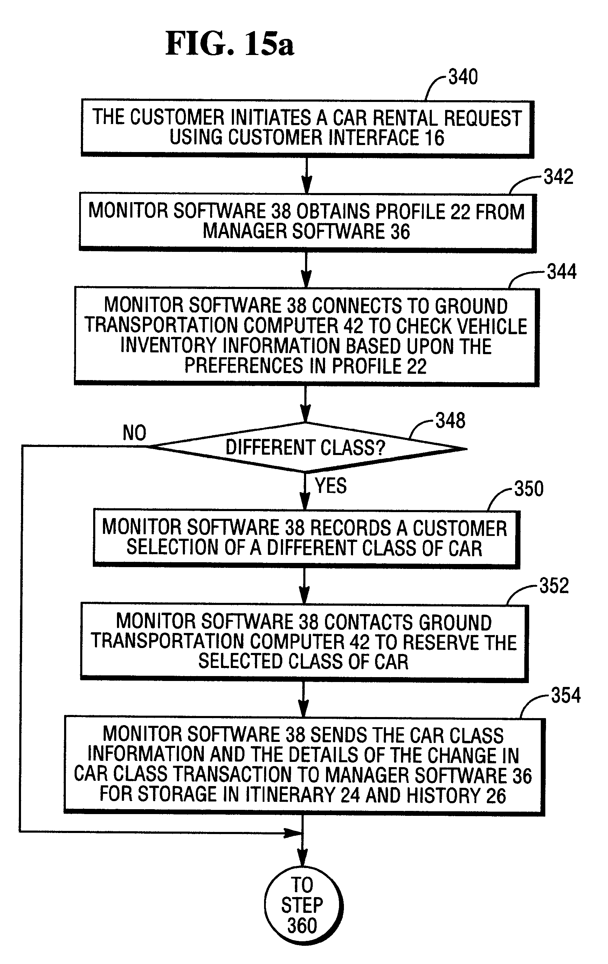

With reference to Figs. 15a-d, monitor software 38 begins an example normal car rental procedure.

With reference to Fig. 15a, the customer initiates a car rental request using customer interface 16 in step 340.

In step 342, monitor software 38 obtains profile 22 from manager software 36.

In step 344, monitor software 38 connects to ground transportation computer 42 to check vehicle inventory information based upon the preferences in profile 22.

In step 348, monitor software 38 displays a screen offering the customer a chance to select a different class of car. Operation continues to step 360 if the customer rejects the option to select a different class of car. Otherwise, operation continues to step 350.

In step 350, monitor software 38 records a customer selection of a different class of car.

In step 352, monitor software 38 contacts ground transportation computer 42 to reserve the selected class of car.

In step 354, monitor software 38 sends the car class information and the details of the change in car class transaction to manager software 36 for storage in itinerary 24 and history 26.

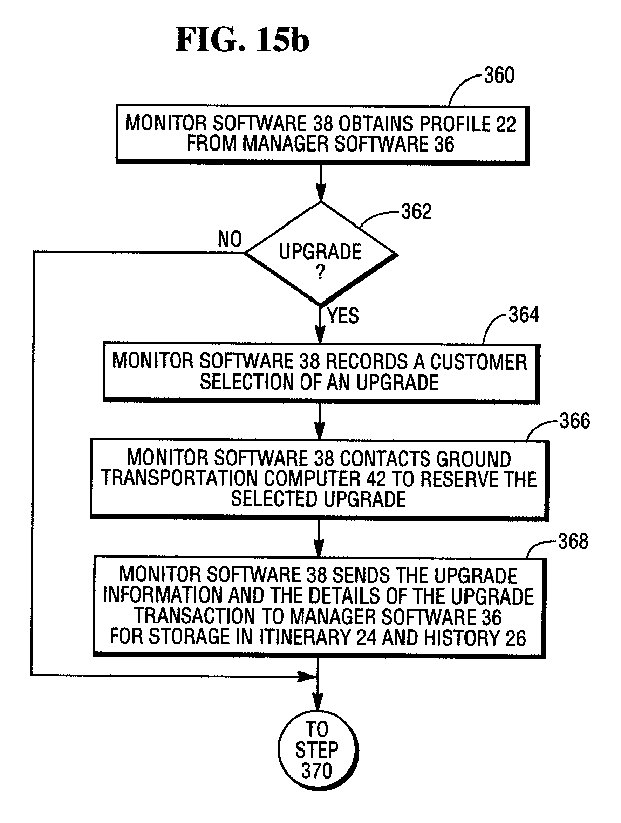

With reference to Fig. 15b, monitor software 38 obtains profile 22 from manager software 36 in step 360.

In step 362, monitor software 38 displays a screen offering the customer a chance to upgrade to a larger vehicle. The choices in the screen may be based upon preferences in profile 22. For example, the screen may offer a chance to upgrade from a mid-size car to a full-size car. Operation continues to step 370 if the customer rejects the option to select a different class of car. Otherwise, operation continues to step 364.

In step 364, monitor software 38 records a customer selection of an upgrade.

In step 366, monitor software 38 contacts ground transportation computer 42 to reserve the selected upgrade.

In step 368, monitor software 38 sends the upgrade information and the details of the upgrade transaction to manager software 36 for storage in itinerary 24 and history 26.

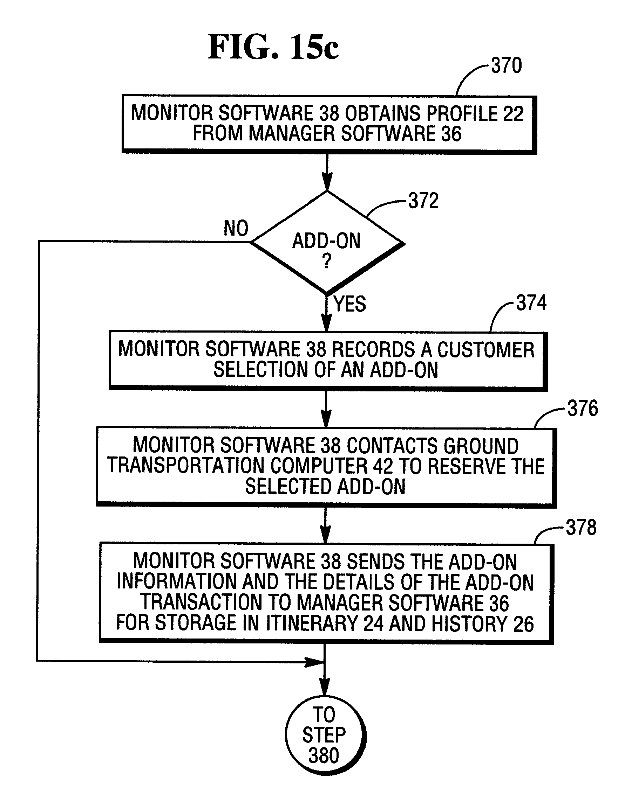

With reference to Fig. 15c, monitor software 38 obtains profile 22 from manager software 36 in step 370.

In step 372, monitor software 38 displays a screen offering the customer a chance to reserve add-ons, such as satellite radio and global positioning satellite receivers. The choices in the screen may be based upon preferences in profile 22. Operation continues to step 380 if the customer rejects the option to select a different class of car. Otherwise, operation continues to step 374.

In step 374, monitor software 38 records a customer selection of an add-on.

In step 376, monitor software 38 contacts ground transportation computer 42 to reserve the selected add-on.

In step 378, monitor software 38 sends the add-on information and the details of the add-on transaction to manager software 36 for storage in itinerary 24 and history 26.

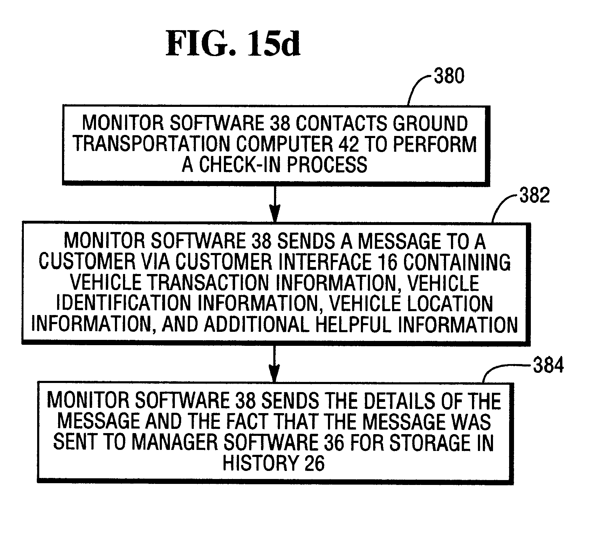

With reference to Fig. 15d, monitor software 38 contacts ground transportation computer 42 to perform a check-in process in step 380.

In step 382, monitor software 38 sends a message to a customer via customer interface 16 containing vehicle transaction information, vehicle identification information, vehicle location information, and additional helpful information.

In step 384, monitor software 38 sends the details of the message and the fact that the message was sent to manager software 36 for storage in history 26.

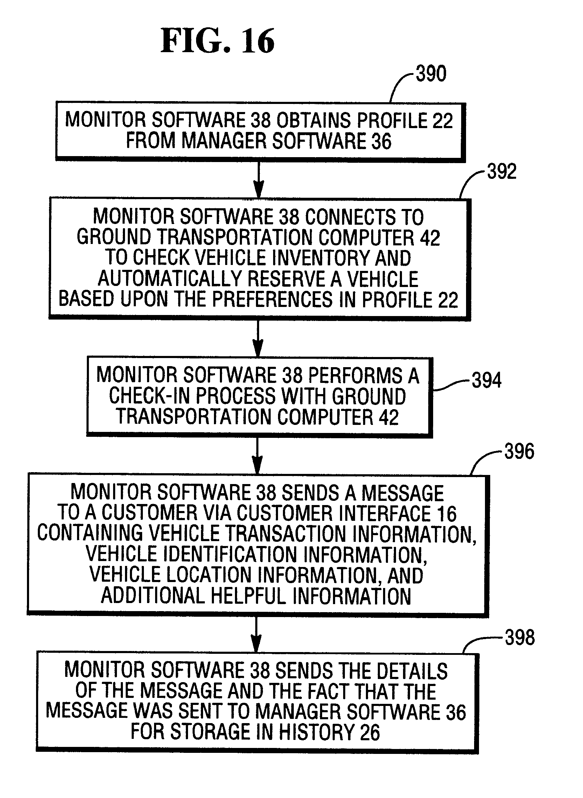

With reference to Fig. 16, monitor software 38 begins an example automatic car rental procedure.

In step 390, monitor software 38 obtains profile 22 from manager software 36.

In step 392, monitor software 38 connects to ground transportation computer 42 to check vehicle inventory and automatically reserve a vehicle based upon the preferences in profile 22.

In step 394, monitor software 38 performs a check-in process with ground transportation computer 42.

In step 394, monitor software 38 sends a message to a customer via customer interface 16 containing vehicle transaction information, vehicle identification information, vehicle location information, and additional helpful information.

In step 396, monitor software 38 sends the details of the message and the fact that the message was sent to manager software 36 for storage in history 26.

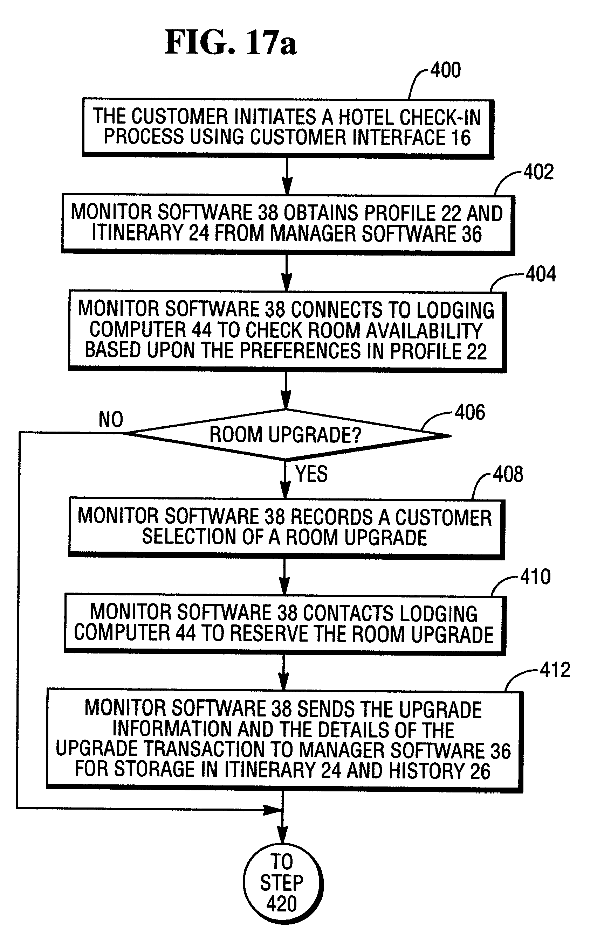

With reference to Figs. 17a-b, monitor software 38 begins an example normal hotel check-in procedure.

With reference to Fig. 17a, the customer initiates a hotel check-in process using customer interface 16 in step 400.

In step 402, monitor software 38 obtains profile 22 and itinerary 24 from manager software 36.

In step 404, monitor software 38 connects to a lodging computer 44, which is a computer affiliated with the customer's reserved hotel, to check room availability based upon the preferences in profile 22 and information in itinerary 24.

In step 406, monitor software 38 displays a screen offering the customer a chance to select a room upgrade. The choices in the screen may be based upon preferences in profile 22. For example, a room upgrade the screen may offer a chance to upgrade to a room with a better view. Operation continues to step 420 if the customer rejects the option to select a room upgrade. Otherwise, operation continues to step 408.

In step 408, monitor software 38 records a customer selection of a room upgrade.

In step 410, monitor software 38 contacts lodging computer 44 to reserve the room upgrade.

In step 412, monitor software 38 sends the upgrade information and the details of the upgrade transaction to manager software 36 for storage in itinerary 24 and history 26.

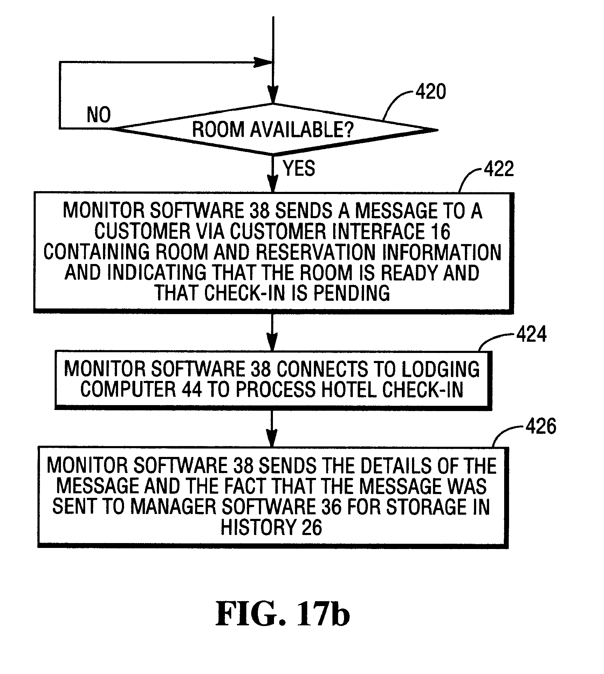

With reference to Fig. 17b, monitor software 38 periodically checks for the reserved room to become available in step 420. If the room becomes available, operation proceeds to step 422.

In step 422, monitor software 38 sends a message to a customer via customer interface 16 containing room and reservation information and indicating that the room is ready and that check-in is pending.

In step 424, monitor software 38 connects to lodging computer 44 to process hotel check-in.

In step 426, monitor software 38 sends the details of the message and the fact that the message was sent to manager software 36 for storage in history 26.

When the customer arrives at the hotel or is otherwise present, the customer need only pick up a room key. If the hotel uses codes for room entry, the message sent to the customer in step 422 would contain the code.

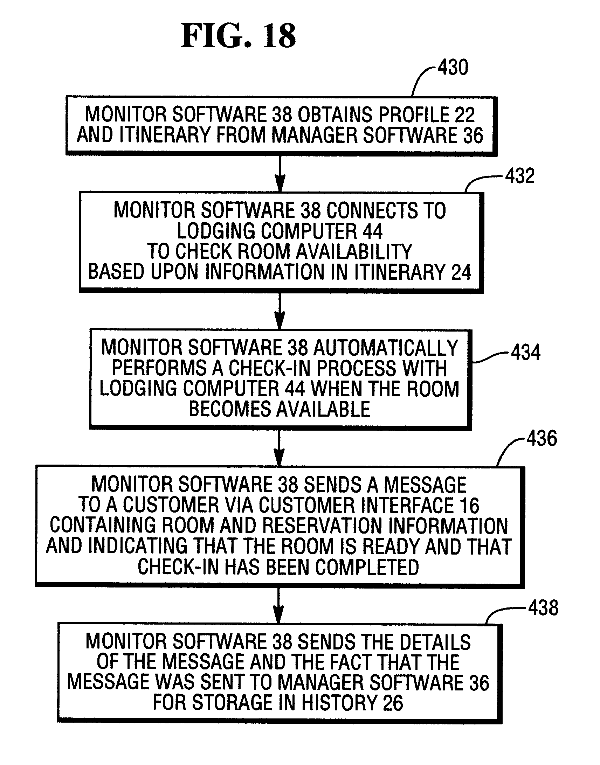

With reference to Fig. 18, monitor software 38 begins an example automatic hotel check-in procedure.

In step 430, monitor software 38 obtains profile 22 and itinerary 24 from manager software 36.

In step 432, monitor software 38 connects to lodging computer 44, which is a computer affiliated with the customer's reserved hotel, to check room availability based upon information in itinerary 24.

In step 434, monitor software 38 automatically performs a check-in process with lodging computer 44 when the room becomes available.

In step 436, monitor software 38 sends a message to a customer via customer interface 16 containing room and reservation information and indicating that the room is ready and that check-in has been completed.

In step 438, monitor software 38 sends the details of the message and the fact that the message was sent to manager software 36 for storage in history 26.

When the customer arrives at the hotel or is otherwise present, the customer need only pick up a room key. If the hotel uses codes for room entry, the message sent to the customer in step 436 would contain the code.

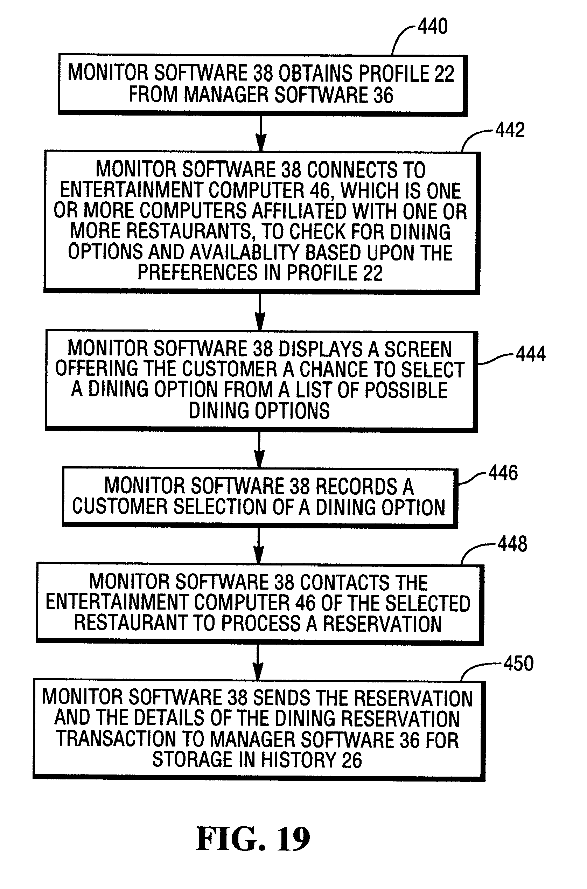

With reference to Fig. 19, monitor software 38 begins an example dining reservation procedure.

In step 440, monitor software 38 obtains profile 22 from manager software 36.

In step 442, monitor software 38 connects to entertainment computer 46, which is one or more computers affiliated with one or more restaurants, to check for dining options and availability based upon the preferences in profile 22.

In step 444, monitor software 38 displays a screen offering the customer a chance to select a dining option from a list of possible dining options.

In step 446, monitor software 38 records a customer selection of a dining option.

In step 448, monitor software 38 contacts the entertainment computer 46 of the selected restaurant to process a reservation.

In step 450, monitor software 38 sends the reservation and the details of the dining reservation transaction to manager software 36 for storage in history 26.

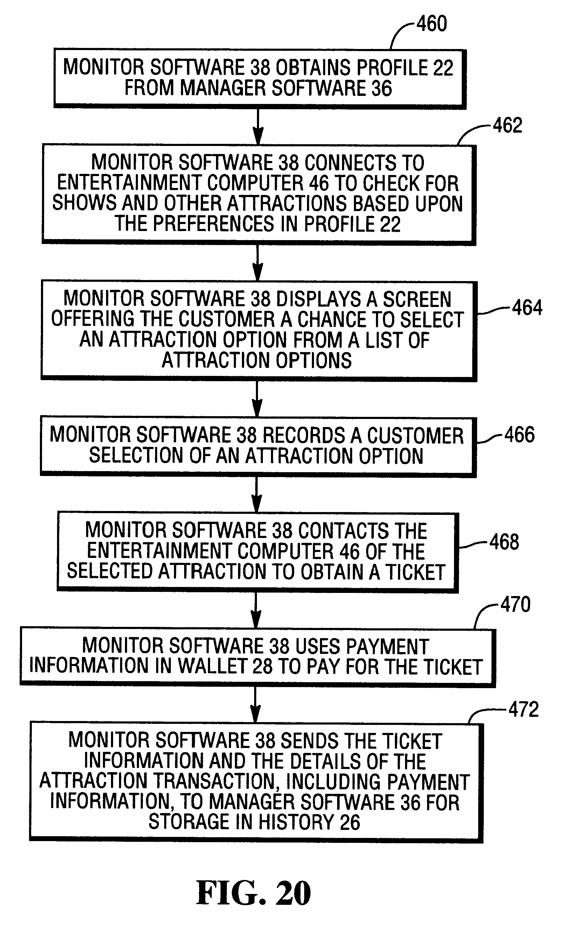

With reference to Fig. 20, monitor software 38 begins an example show or attraction ticket procurement procedure.

In step 460, monitor software 38 obtains profile 22 from manager software 36.

In step 462, monitor software 38 connects to entertainment computer 46, which is one or more computers affiliated with one or more attractions, to check for shows and other attractions based upon the preferences in profile 22.

In step 464, monitor software 38 displays a screen offering the customer a chance to select an attraction option from a list of attraction options.

In step 466, monitor software 38 records a customer selection of an attraction option via customer interface 16.

In step 468, monitor software 38 contacts the entertainment computer 46 of the selected attraction to obtain a ticket.

In step 470, monitor software 38 uses payment information in wallet 28 to pay for the ticket.

In step 472, monitor software 38 sends the ticket information and the details of the attraction transaction, including payment information, to manager software 36 for storage in history 26.

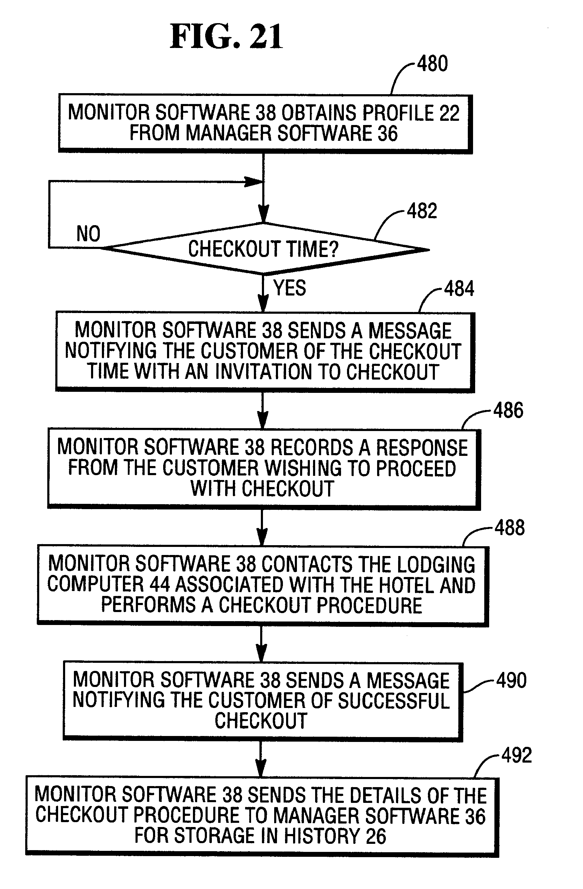

With reference to Fig. 21, monitor software 38 begins an example normal hotel checkout procedure.

In step 480, monitor software 38 obtains profile 22 from manager software 36.

In step 482, monitor software 38 waits for a hotel checkout time. The checkout time may be a single time or a window of times published by the hotel. Operation proceeds to step 484 if monitor software 38 determines that a current time is the checkout time.

In step 484, monitor software 38 sends a message notifying the customer of the checkout time with an invitation to checkout.

In step 486, monitor software 38 records a response from the customer wishing to proceed with checkout via customer interface 16.

In step 488, monitor software 38 contacts the lodging computer 44 associated with the hotel and performs a checkout procedure.

In step 490, monitor software 38 sends a message notifying the customer of successful checkout.

In step 492, monitor software 38 sends the details of the checkout procedure to manager software 36 for storage in history 26.

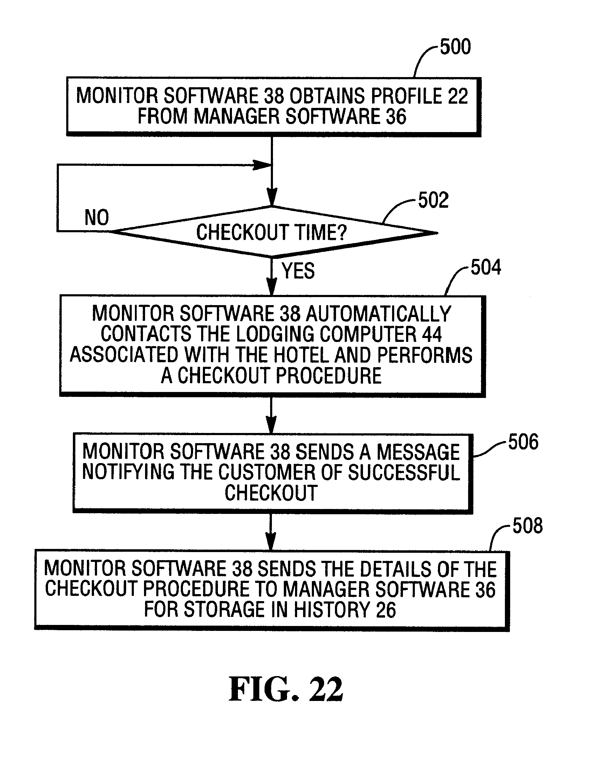

With reference to Fig. 22, monitor software 38 begins an example automatic hotel checkout procedure.

In step 500, monitor software 38 obtains profile 22 from manager software 36.

In step 502, monitor software 38 waits for a hotel checkout time. The checkout time may be a single time or a window of times published by the hotel. Operation proceeds to step 504 if monitor software 38 determines that a current time is the checkout time.

In step 504, monitor software 38 automatically contacts the lodging computer 44 associated with the hotel and performs a checkout procedure, in accordance with preferences in profile 22.

In step 506, monitor software 38 sends a message notifying the customer of successful checkout.

In step 508, monitor software 38 sends the details of the checkout procedure to manager software 36 for storage in history 26.

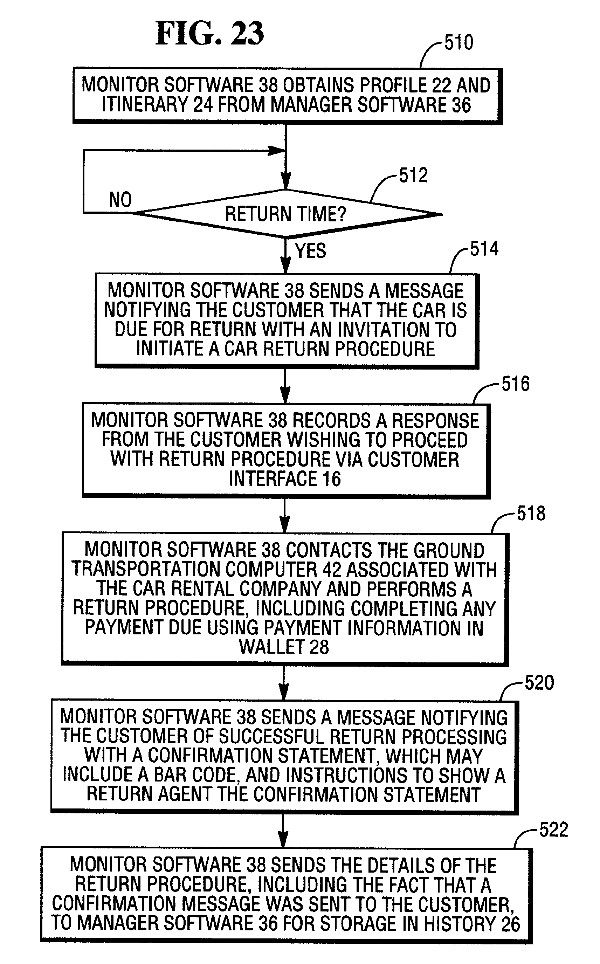

With reference to Fig. 23, monitor software 38 begins an example car rental return procedure.

In step 510, monitor software 38 obtains profile 22 and itinerary 24 from manager software 36.

In step 512, monitor software 38 waits for a scheduled return time based upon itinerary 24. The return time may be a single time or a window of times published by the car rental company. Operation proceeds to step 514 if monitor software 38 determines that a current time is the return time.

In step 514, monitor software 38 sends a message notifying the customer that the car is due for return with an invitation to initiate a car return procedure.

In step 516, monitor software 38 records a response from the customer wishing to proceed with return procedure via customer interface 16.

In step 518, monitor software 38 contacts the ground transportation computer 42 associated with the car rental company and performs a return procedure, including completing any payment due using payment information in wallet 28.

In step 520, monitor software 38 sends a message notifying the customer of successful return processing with a confirmation statement, which may include a bar code, and instructions to show a return agent the confirmation statement.

In step 522, monitor software 38 sends the details of the return procedure, including the fact that a confirmation message was sent to the customer, to manager software 36 for storage in history 26.

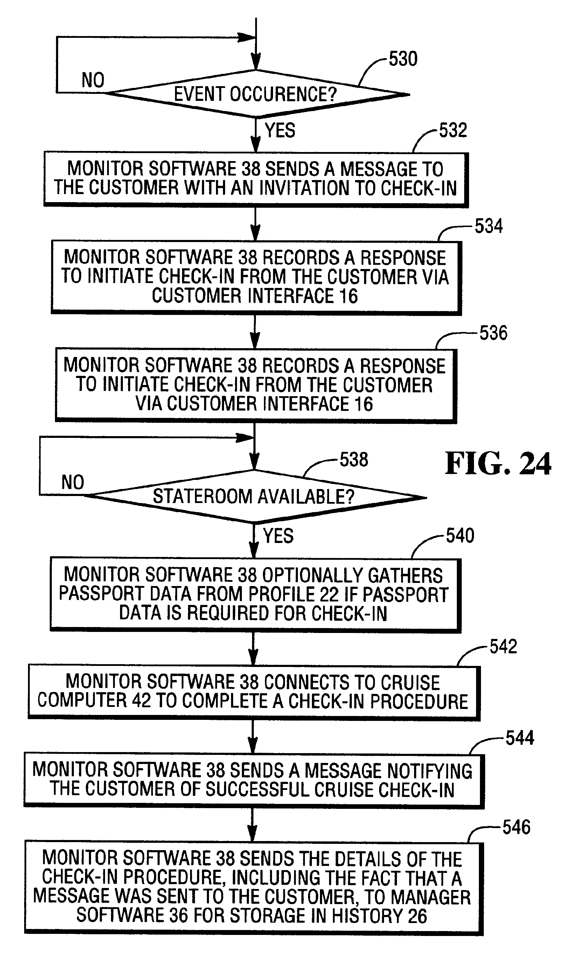

With reference to Fig. 24, monitor software 38 begins an example cruise check-in procedure.

In step 530, monitor software 38 waits for an event to occur before initiating cruise check-in. The event may include hotel checkout, car rental return, or in another travel scenario, flight arrival, or other event. If monitor software 38 receives an indication of the event, operation proceeds to step 532.

In step 532, monitor software 38 sends a message to the customer with an invitation to check-in.

In step 534, monitor software 38 records a response to initiate check-in from the customer via customer interface 16.

In step 536, monitor software 38 obtains profile 22 and itinerary 24 from manager software 36.

In step 538, monitor software 38 connects to cruise computer 48, which is the computer of the cruise company involved, using the information in profile 22 to check stateroom availability. If a stateroom is available, operation proceeds to step 540.

In step 540, monitor software 38 optionally gathers passport data from profile 22 if passport data is required for check-in.

In step 542, monitor software 38 connects to cruise computer 42 to complete a check-in procedure.

In step 544, monitor software 38 sends a message notifying the customer of successful cruise check-in.

In step 546, monitor software 38 sends the details of the check-in procedure, including the fact that a message was sent to the customer, to manager software 36 for storage in history 26.

Monitoring software 38 may process the return flight in a similar fashion as the initial flight. Monitoring software 38 may process additional tasks on behalf of the customer.

Although particular reference has been made to certain embodiments, variations and modifications are also envisioned within the scope of the following claims.

## Claims

1. A system (10) for managing travel details, the system (10) comprising:
a management computer (12) executing manager software (36) for interacting with stored customer-related information, and monitor software (38) for interacting with computers (40,42, or 48) operated by a plurality of different transport providers; and
a gateway (52) operable to facilitate mutual communication between the transport provider computers (40,42, or 48) and the management computer (12);
wherein the customer-related information includes a profile (22).

2. A system according to claim 1, wherein the profile (22) includes third party contact information and the management computer (12) is operable, in the event that the customer has been delayed, to send messages automatically to such third party contacts as the customer has identified in the profile (22).

3. A system according to claim 2, wherein the monitor software (38) sends a message containing a URL of a website of a transport computer (40,42,to facilitate check-in for a first journey segment.

4. A system according to claim 3, wherein the message includes an electronic boarding pass.

5. A system according to either of claims 1 or 2, wherein the monitor software (38) automatically checks the customer onto a journey segment a predetermined time before departure, in accordance with customer check-in preferences stored in the profile (22).

6. A system according to claim 5, wherein the monitor software (38) transmits a message to the customer using contact details for the customer stored in the profile (22) for that customer to confirm that the customer has been checked in for the journey segment.

7. A system according to any of claims 1 to 6, wherein the monitor software (38) periodically contacts a transport provider's computer (40,42, or 48) to ascertain if a journey segment on which the customer is book is delayed or cancelled.

8. A system according to claim 7, wherein, in the event of a cancellation or delay, the monitor software (38) sends a message to the customer indicating that monitor software (38) has automatically rescheduled the customer for a different journey segment, in accordance with customer travel change preferences stored in the profile (22).

9. A system according to any of claims 1 to 8, wherein the system (10) further comprises an application programming interface (50) associated with the management computer (12), and a plurality of self-service terminals (54) coupled to the management computer (12) and communicating therewith via the application programming interface (50).

10. A system according to any of claims 1 to 8, wherein the monitor software (38) monitors the status of a transport vehicle conveying the customer on a first journey segment, and books or re-books the customer on a second journey segment based on the expected arrival time of the first journey segment.

11. A system according to claim 10, wherein the monitor software (38) sends a message to the customer with a confirmation of the second journey segment booking.

12. A method of managing customer travel comprising:
recording customer information and preferences relating to customer travel;
storing the customer information as a profile in computer storage;
monitoring travel status of vehicles operated by the plurality of transport providers that are relevant to the customer information profile; and
using the customer information profile to alter customer travel arrangements automatically in response to a change of the travel status of a vehicle on which the customer is booked.

13. A method according to claim 12, wherein the step of using the customer information profile to alter customer travel arrangements includes booking the customer on a different transport vehicle for a second journey segment while the customer is currently travelling on a first journey segment.

14. A method according to claim 12 or 13, wherein the method further comprises sending a communication to the customer to provide updated details of travel arrangements for the customer.

15. A method according to any of claims 12 to 14, wherein the method further comprises the step of sending a message to a third party using third party contact information stored in the profile if the customer is booked on a vehicle operated by one of the plurality of transport providers and the status of that vehicle changes.
